# EUROPEAN PATENT SPECIFICATION

(11) **EP 1 496 442 B1**
(45) Date of publication and mention of the grant of the patent: **16.03.2011**
(21) Application number: 03745712.4
(22) Date of filing: 11.04.2003
(51) Int. Cl.: G06F 13/00, H04L 12/24

(54) **DEVICE MANAGEMENT SYSTEM, PROBE DEVICE, DEVICE AND PROGRAM**
VORRICHTUNGSVERWALTUNGSSYSTEM, PRÜFVORRICHTUNG, VORRICHTUNG UND PROGRAMM
SYSTEME DE GESTION DES DISPOSITIFS, DISPOSITIF DE VERIFICATION, DISPOSITIF ET PROGRAMME

(30) Priority: 11.04.2002 JP 2002109521; 03.04.2003 JP 2003100797
(43) Date of publication of application: 12.01.2005
(73) Proprietor: Brother Kogyo Kabushiki Kaisha, Nagoya-shi, Aichi-ken 467-8561 (JP)
(72) Inventor: KAWAI, Sunao Brother Kogyo Kabushiki Kaisha, Nagoya-shi, Aichi- ken 467-8561 (JP); NOGAWA, Hideki Brother Kogyo Kabushiki Kaisha, Nagoya-shi, Aichi- ken 467-8561 (JP); OHARA, Kiyotaka Brother Kogyo Kabushiki Kaisha, Nagoya-shi, Aichi- ken 467-8561 (JP); ISHIMOTO, Kan Brother Kogyo Kabushiki Kaisha, Nagoya-shi, Aichi- ken 467-8561 (JP)
(74) Representative: Hofer, Dorothea
(86) International application number: PCT/JP2003/004648
(87) International publication number: WO 2003/085529

(56) References cited:
- EP-A- 0 955 760
- EP-A- 1 059 766
- JP-A- 9 172 433
- JP-A- 9 172 435
- JP-A- 2001 036 550
- JP-A- 2001 197 059
- JP-A- 2002 016 599
- JP-A- 2002 016 599

## Description

### TECHNICAL FIELD

The present invention relates to a device management system on a network, a probe device employed in the device management system, a device employed in the device management system, and a computer program therefor. The present invention particularly relates to a device management system, probe device, device, and computer program capable of managing devices existing beyond a router without performing the troublesome process of individually inputting an IP address for each device on networks existing beyond the router.

### BACKGROUND ART

Conventionally, a device for managing other devices connected to a network (hereinafter referred to as a "management device") has been provided on a network such as an intra-office LAN (refer to Japanese unexamined patent application publication No. 06-338884, for example). This management device transmits a broadcast packet onto the network with the destination IP address having 255.255.255.255, acquires management data through responses from printers and other devices that received the broadcast packet, and recognizes the vendor name, model, ink and toner levels, number of printed pages, status of settings, and status of errors for devices included in the management data in order to manage the devices.

In recent years, however, intra-office LANs have become larger in scale so that most of networks connected to one another via routers. When networks are connected to one another via routers in this way, the aforementioned broadcast packets transmitted by the management device do not always reach networks beyond the router. This is because network administrators commonly establish settings that prevent broadcast packets from passing beyond a router in order to prevent an increase in traffic on both networks connected via the router. Consequently, even if a management device *a* connected to a network A transmits a broadcast packet on the network A, for example, the broadcast packet is sometimes not transmitted to a network B connected to the network A via a router. In other words, in some cases the management device *a* connected to the network A cannot acquire management data for one or a plurality of devices *b* connected to the network B simply by transmitting a broadcast packet on the network A and, hence, cannot manage the devices *b*.

In such cases, devices *b* are managed by the management device *a* by inputting individual IP addresses for each device *b* to be managed that exists on a network beyond the router into the management device *a* and controlling the transmission and reception of management data between the management device *a* and the devices *b* based on the inputted IP addresses.

However, the process for inputting IP addresses individually in this way becomes extremely complex with an increase in the number of devices *b* targeted for management and existing on a network beyond the router.

Document EP 1 059 766 A2 discloses a device management system having a management device in a network, broadcasting means for broadcasting a management data request in that network and managing means for managing a device based on data received due to the broadcast.

Document JP 2002 016599 A discloses a network system having a meter measuring network traffic and transferring measured data to a control server. The control server stores a policy for a communication service quality warrant control or the like, analyzes measured data collected from the meter, transmit the control instruction, in response to the policy to an object device such as a rooter, and the rooter conducts the control, in response to the control instruction to attain detailed communication server quality warrant control in response to a network state.

Documents EP 0 955 760 A1 discloses a network device connected to a network, which is detected, and an IP address of the detected network device is acquired. A network device as control object is designed from the detected network device, and IP address to be set in the designated network device is inputted. The input IP address is compared with the acquired IP address, and if these IP addresses equal each other, the IP address setting is prevented, while if they are not equal, the IP address setting is performed. Thus, setting of IP address the same as the already set in another network device can be prevented.

Therefore, it is an object of the present invention to provide a device management system, a probe device, a device, a method and a computer program in which a management device can manage devices existing on networks beyond routers, without performing the operation of individually inputting IP addresses for each device existing on the networks beyond the routers.

This object is solved by a device management system of claims 1 and 5, a probe device of claim 21 and 22, a device of claim 23, a method of claims 25 - 27 and a computer program product of claim 29.

### DISCLOSURE OF THE INVENTION

The invention as set forth in Claim 1 is i.a characterized by a device management system for managing a device connected to a first network with a management device connected to a second network that can communicate with the first network through a router, characterized by a probe device provided on the first network and capable of communicating with the management device. The probe device includes broadcasting means for broadcasting a request for management data used to manage the device to the first network to which the probe device is connected; and forwarding means for forwarding the management data to the management device, the management data being obtained from the device that responds to the broadcast. The management device includes managing means for managing the device on the first network based on the management data forwarded by the forwarding means.

In this device management system, the probe device capable of communicating with the management device is provided on the first network in order that the management device connected to the second network can manage the devices connected to the first network. This probe device broadcasts a request over the first network for management data to manage the devices and forwards the management data obtained from the devices responding to the broadcast to the management device. Accordingly, the management device can manage devices on the first network based on the management data forwarded from the probe device.

Therefore, when using the device management system of the present invention, the management device connected to the second network can identify and manage a device connected to the first network. Further, the device management system of the present invention enables the management device to manage a device connected to the first network simply by establishing communications between the management device and the probe device, thereby eliminating the conventional troublesome operations of individually inputting IP addresses for a management target device to be managed that are connected to the first network.

The invention set forth in Claim 21 is characterized by a probe device used in the device management system according to Claim 1 and provided on the first network in communication with the management device. The probe device includes broadcasting means for broadcasting over the first network connected to the probe device a request for management data to manage the device; and forwarding means for forwarding to the management device the management data obtained from a device responding to the broadcast. The device management system described above can be configured using this probe device to achieve the same operations and effects described for the device management system according to Claim 1.

The invention as set forth in Claim 25 is characterized by a method executed by the probe device used in the device management system according to Claim 1 and provided on the first network in communication with the management device, the method includes a broadcast step for broadcasting over the first network connected to the probe device a request for management data to manage the device; and a forwarding step for forwarding to the management device the management data obtained from the device responding to the broadcast. By directing the probe device to execute this method, the same operations and effects described for the device management system of Claim 1 can be obtained.

There are a variety of methods for forwarding management data of a device connected to the first network from the probe device to the management device. According to the device management system of Claim 2, the forwarding means forwards the management data to the management device sequentially each time management data is obtained from the device that responds to the broadcast.

According to the device management system of Claim 3, the probe device further includes storing means for storing the management data obtained from the device that responds to the broadcast. The forwarding means forwards new management data to the management device, the new management data being obtained from the device that responds to the broadcast, the new management data being different from the previous management data stored by the storing means. Since unnecessary management data is not forwarded from the probe device to the management device with this configuration, it is possible to reduce the processing load on the management device required for receiving such management data, and particularly on management devices that receive management data from a plurality of probe devices.

According to the device management system of Claim 4, it is preferable that the management device includes notifying means for notifying the probe device of a condition for a management-target device, and that the forwarding means forwards to the management device the management data of a device that satisfies the condition notified through the notifying means. Since unnecessary management data is not forwarded from the probe device to the management device with this configuration, it is possible to reduce the processing load on the management device required for receiving such management data, and particularly on management devices that receive management data from a plurality of probe devices.

A device management system according to Claim 5 is for managing a device connected to a first network with a management device connected to a second network that can communicate with the first network through a router. The device management system includes a probe device provided on the first network and capable of communicating with the management device. The probe device includes: broadcasting means for broadcasting over the first network connected to the probe device a command for the device to transmit management data for managing the device to the management device. The device includes destination setting and transmitting means for setting a response destination for the broadcast to the management device based on the command by the broadcasting means to transmit the management data. The management device includes managing means for managing the device on the first network based on the management data received from the device.

In this device management system, a probe device capable of communicating with the management device is provided on the first network in order that the management device connected to the second network can manage the devices connected to the first network. This probe device broadcasts a request over the first network for management data used to manage the devices. The devices set the destination for a response to the broadcast to the management device based on a command received via the broadcasting means and transmit the management data to the management device. Accordingly, the management device can manage devices on the first network based on the management data received from the devices.

Therefore, when using the device management system of the present invention, the management device connected to the second network can identify and manage devices connected to the first network.

According to a probe device of Claim 22, the probe device is provided on the first network in communication with the management device. The probe device includes broadcasting means for broadcasting over the first network connected to the probe device a command for the device to transmit management data for managing the devices to the management device. The device management system according to Claim 5 can be configured using this probe device to achieve the same operations and effects described for the device management system according to Claim 5.

A method according to Claim 26 is executed on the probe device used in the device management system according to Claim 5 and provided on the first network in communication with the management device. The method includes a broadcast step for broadcasting over the first network connected to the probe device a command for the device to transmit management data for managing the devices to the management device. Hence, by executing this method on the probe device, it is possible to configure a probe device related to the device management system according to Claim 5, thereby achieving the same operations and effects as described for the device management system according to Claim 5.

A device according to Claim 23 is connected to the first network. The device includes destination setting and transmitting means for setting a destination to the management device and transmitting the management data thereto when commanded through a broadcast by the probe device to transmit management data for managing the devices to the management device. By using this device, it is possible to configure the device management system according to Claim 5, thereby achieving the same operations and effects as described for the device management system according to Claim 5.

A method according to Claim 27 is for a device connected to the first network (1b-1f), including a destination setting and transmitting step for setting a destination to the management device and transmitting the management data thereto when commanded through a broadcast by the probe device to transmit management data for managing the devices to the management device. Hence, by executing this method on the device, it is possible to configure a device related to the device management system according to Claim 5, thereby achieving the same operations and effects as described for the device management system according to Claim 5.

According to the device management system of Claim 6, the management device includes notifying means for notifying the probe device of a condition for a management-target device. The management device can broadcast over the first network a request for management data from a device that satisfies the condition notified through the notifying means. With this construction, a device not to be managed does not respond to a request for management data, thereby avoiding unnecessary communications.

According to the device management system of Claim 7, the probe device includes determining means for determining whether a new device is connected to the first network. The probe device can broadcast when the determining means has determined that a new device is connected to the first network. In this device management system, the probe device issues a broadcast when a new device is connected to the first network so that the management device identifies the newly connected device. Accordingly, the device management system according to the present invention can automatically manage new devices with the management device simply by connecting the new device to the network.

According to the device management system of Claim 8, the broadcasting means can broadcast when receiving from the management device a request for a broadcast. With this construction, the management device can acquire management data of the new device when needed.

According to the device management system of Claim 9, the management device can direct the registered probe device for a broadcast. With this construction, management data can be collected using the registered probe device.

Like the device management system according to Claim 10, a management device connected to the second network unicasts requesting management data from a device connected to the first network when the registered probe device does not exist on the first network. With this construction, management data can be collected even when no probe device exists on the first network.

Like the device management system according to Claim 11, a probe device connected to a sub-network unicasts requesting management data from a device connected to the first network. The sub-network has a predetermined number of routers connected to the first network. The predetermined number is less than the number of routers between the first network and the management device when the registered probe device does not exist on the first network. This construction eliminates the problem of a great load being placed on networks between two devices caused by two devices whose networks are far apart (whose networks are separated by a large number of routers) caused by numerous unicast transmissions performed between the two devices. Further, when a unicast transmission is performed between two devices whose networks are far apart, there is an increase in the number of relay processes performed by the routers between the networks, resulting in an increased amount of time required to collect the management data. However, with the construction described above, management data is collected between two devices whose networks are closer to each other, thereby reducing the amount of time required for the collection.

Like the device management system according to Claim 12, a probe device (5b-5f) identified on a network having no registered probe device (5b-5f) can be newly registered. With this construction, it is possible to eliminate the time and effort required to register probe devices.

Like the device management system according to Claim 13, when a device capable of functioning as a probe device is identified on a network having no registered probe device, a computer program enabling a device to function as a probe device is transmitted to the device to actuate the device as a probe device, and the device is registered on the management device as a probe device. This construction not only makes it possible to eliminate the time and effort required for registering probe devices with the management device, but also enables the device to function as a probe device, thereby increasing the efficiency of collecting management data.

Like the device management system according to Claim 14, the management device notifies the probe device of a network range for collecting management data, and the probe device requests management data from a device belonging to the notified network range through one of a broadcast and a unicast. With this construction, it is possible to reduce the load on the management device.

The probe device according to Claim 14 includes broadcasting means for broadcasting a request for management data to a device within a network range for collecting management data; and unicast means for unicasting a request for management data to a device within the network range when notified of the network range from the management device. By using this device management system, it is possible to configure the device management system according to Claim 14, thereby achieving the same operations and effects as described for the device management system according to Claim 14.

A method according to Claim 28 implements a broadcast process for broadcasting a request for management data from a device within a network range for collecting management data; and a unicast process for unicasting a request for management data from a device within the network range when notified of the network range from the management device. By executing the method on the probe device, it is possible to configure a probe device related to the device management system according to Claim 14, thereby achieving the same operations and effects as described for the device management system according to Claim 14.

Like the device management system according to Claim 15, the management device in the device management system according to Claims 1 or 5 includes program transmitting means for determining whether a device to be managed based on the management data can function as a probe device and transmitting a probing program to the device which is determined to function as a probe device, the probing program enabling a device to function as a probe device; and the device receiving the probing program includes installing means for installing the probing program. This device management system can convert a device capable of functioning as a probe device into a probe device. Accordingly, if a probe device on this device management system malfunctions or the like, device management can continue by converting the device into a probe device.

A device may be converted into a probe device when communication is not possible between the management device and the probe device, as described for the device management system according to Claim 16.

Further, when a plurality of devices capable of functioning as probe devices have been identified, a probing program may be transmitted to the device with the higher priority, as described for the device management system according to Claim 17. This priority can be set as desired, for example, to give priority to devices that have a long history of management under the management device or devices that have a high operating efficiency.

Like the device management system according to Claim 18, the device in the device management system according to any one of Claims 1-18 is a printer; and the management data includes data indicating at least one of printer settings and printer status. With this construction, it is possible to ascertain printer settings or printer status based on the management data.

Like the device management system according to Claim 19, the management data in the device management system of Claim 8 includes data indicating at least one of printer settings and printer status. The probe device is a printer, the probe device transmitting management data thereof to the management device upon receiving a request from the management device for a broadcast. With this construction, management data for the probe device may be transmitted to the management device upon receiving a request from the management device to execute a broadcast transmission. Accordingly, the management device can easily manage the probe devices without requiring the issuance of a separate request for management data from the probe devices themselves.

Like the device management system according to Claim 20, in device management system of Claim 14, the management data includes data indicating at least one of printer settings and printer status; and the probe device is a printer, the probe device transmitting management data thereof to the management device upon receiving notification from the management device a network range for collecting management data. With this construction, management data for the probe device may be transmitted to the management device upon receiving notification from the management device of a network range for collecting management data. Accordingly, the management device can easily manage the probe device without requiring the issuance of a separate request for management data from the probe devices themselves.

### BRIEF DESCRIPTION OF THE DRAWINGS

In the drawings:
Fig. 1 shows the structure of an intra-office LAN to which a device management system is applied;
Figs. 2(a)-2(c) show the internal structure of a management device, a probe device, and a device;
Fig. 3 shows a Data Collection Setup window for setting management targets;
Fig. 4 shows an OID table used for collecting management data;
Fig. 5 shows a device list that stores IP addresses of devices for which management data can be collected;
Figs. 6(a)-6(d) are schematic diagrams illustrating the overall process performed by the device management system of the first embodiment;
Figs. 7(a)-7(c) show sample "SNMP REPLY" packets;
Fig. 8 is a flowchart showing a first management device process according to the first embodiment;
Fig. 9 is a flowchart showing a process for requesting management data according to the first embodiment;
Fig. 10 is a flowchart showing a process for requesting management data through a broadcast according to the first embodiment;
Fig. 11 is a flowchart showing a process for requesting management data through a unicast according to the first embodiment;
Fig. 12 is a flowchart showing a second management device process according to the first embodiment;
Fig. 13 is a flowchart showing a process for screening management data according to the first embodiment;
Fig. 14 is a flowchart showing a device process according to the first embodiment;
Fig. 15 is a flowchart showing a probe device process according to the first embodiment;
Fig. 16 shows a list of contents of previously received packets;
Fig. 17 is a flowchart showing a process for requesting management data through a unicast according to a second embodiment;
Fig. 18 is a flowchart showing a process for calculating the distance between networks according to the second embodiment;
Fig. 19 is a flowchart showing a process for registering probe devices according to a third embodiment;
Fig. 20 is a flowchart showing an installation process according to the third embodiment;
Fig. 21 is a flowchart showing a process for transmitting a "SNMP REPLY" packet according to a fourth embodiment; and
Fig. 22 is a flowchart showing a monitoring process according to a fifth embodiment.

### BEST MODE FOR CARRYING OUT THE INVENTION

### First Embodiment

Next, a device management system according to a first embodiment of the present invention will be described.

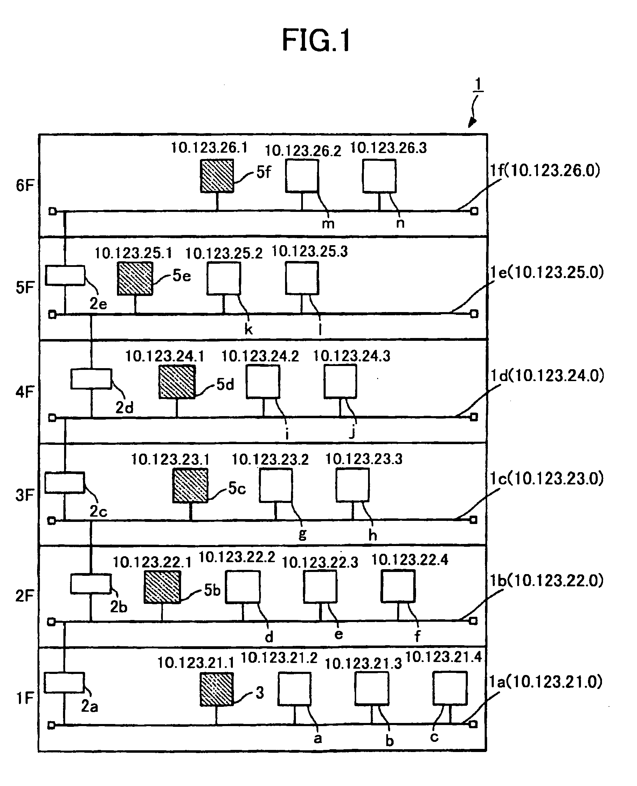

Fig. 1 is a block diagram of an intra-office LAN to which the device management system of the preferred embodiment has been applied.

The device management system of the preferred embodiment is applied to a communication network in which a plurality of networks 1a-1f are connected to each other via routers 2a-2e, as in the intra-office LAN 1 shown in Fig. 1.

As shown in Fig. 1, the LAN 1 according to the preferred embodiment is constructed of the networks 1a-1f installed on different floors and connected to each other via the routers 2a-2e. Various network devices, including personal computers, printers, scanners, and facsimile machines, are connected to the networks 1a-1f on each floor (floors 1-6 in Fig. 1). For convenience, only printers and personal computers, which are particularly relevant to the preferred embodiment, have been included in the drawings and the following description from among the various network devices connected to the networks 1a-1f. Here, devices a-n and probe devices 5b-5f are printers, and a management device 3 is a personal computer. In this embodiment, the description will be made for the case in which a personal computer manages printers as the devices a-n and the probe devices 5b-5f.

As shown in Fig. 1, the management device 3 for controlling the devices a-n and the probe devices 5b-5f on the LAN 1 is connected to the network 1a, while the probe devices 5b-5f for assisting the management device 3 in device management are connected to the other networks 1b-1f.

The communication protocol used on the LAN 1 in the preferred embodiment is TCP/IP.

The management device 3 and the probe devices 5b-5f specify each others' IP addresses in order to communicate beyond the routers 2a-2e through a unicast.

Each device in the preferred embodiment (the management device 3, the probe devices 5b-5f, and the devices a-n) supports either version 1 or version 2 of the simple network management protocol (SNMP) defined by Request For Comments (RFC) 1157 or RFC 1441. SNMP is a protocol for monitoring devices connected to a network.

Devices targeted for management (the probe devices 5b-5f and the devices a-n) are provided with a Management Information Base (MIB) defined by RFC 1156 or RFC 1213, which stores management data for these devices in a database. The MIB is a database existing in network devices that support SNMP for storing management data on the network devices. Management data are referred to as objects in this MIB. A unique number (object ID; designated as OID hereinafter) is assigned to each object, and a database having a tree structure is constructed based on these OIDs. When appropriate, management data is referred to as objects in the following description.

Management data is transmitted and received in SNMP as follows: a "SNMP GET" packet specifying the OIDs of management data to be collected is transmitted to network devices supporting SNMP. In response, network devices receiving this packet store management data corresponding to the specified OIDs in a "SNMP REPLY" packet and return the packet.

The network addresses (class C in the preferred embodiment, wherein the host address segment is eight bits) assigned to each of the networks 1a-1f will be described below in the order 10.123.21.0, 10.123.22.0, ..., and 10.123.26.0, as shown in Fig. 1. Further, the host addresses assigned to each device (the management device 3, the probe devices 5b-5f, and the devices a-n) connected to the networks 1a-1f are described in the order 1, 2, ... from left to right in Fig. 1 for each floor. In the following description, the network administrator has set each of the routers 2a-2e so that a broadcast packet (a packet having the destination IP address set to 255.255.255.255) transmitted within one network connected to a router will not be transmitted to other networks connected to the same router.

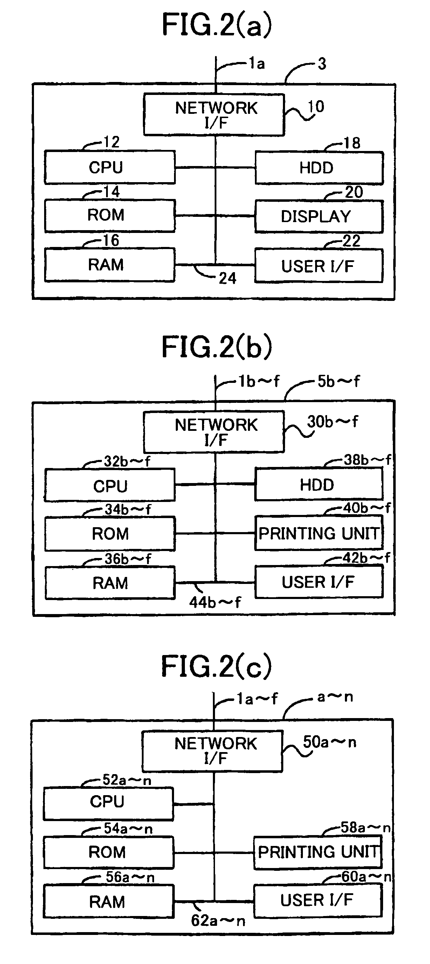

The management device 3, the probe devices 5b-5f, and the devices a-n in the preferred embodiment are configured as shown in Figs. 2(a)-2(c).

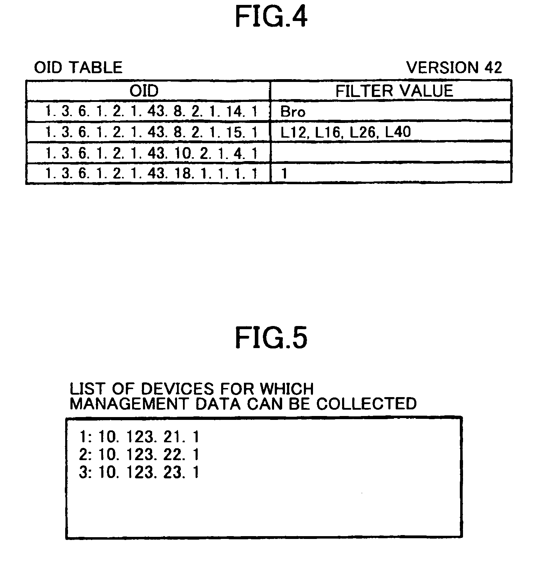

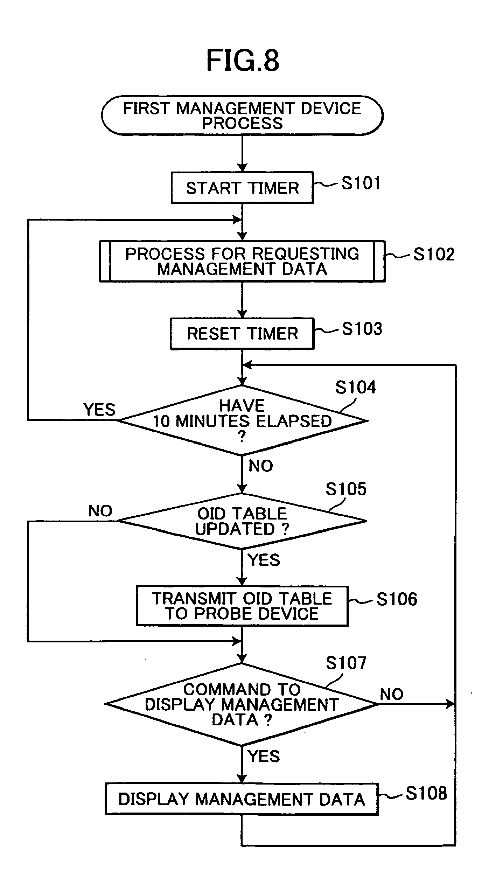

As shown in Fig. 2(a), the management device 3 is configured of a network interface (network I/F) 10, a CPU 12, a ROM 14, a RAM 16, a hard disk drive (HDD) 18, and a display 20, a user interface (user I/F) 22. The network I/F 10 transmits and receives packets via the network 1a. The ROM 14 is a nonvolatile memory for storing various control programs. The RAM 16 is a volatile memory for temporarily storing the results of processing various data. The HDD 18 is a storage medium for storing an OID table (see Fig. 4), a device list of devices for which management data can be collected (see Fig. 5), programs related to processes shown in the flowcharts of Figs. 8-13, and management data collected from devices described later. The display 20 is configured of an LCD for displaying the results of processing various data. The user I/F 22 is configured of a keyboard, and mouse for enabling the user to perform selections. All of these components are connected to one another via a bus 24 and are controlled comprehensively by the CPU 12.

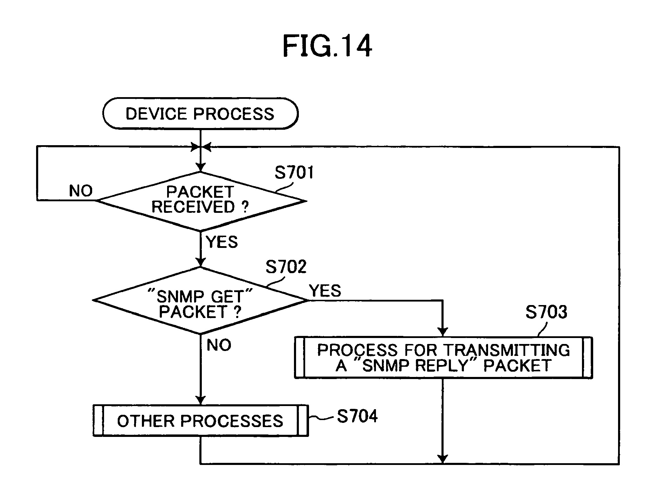

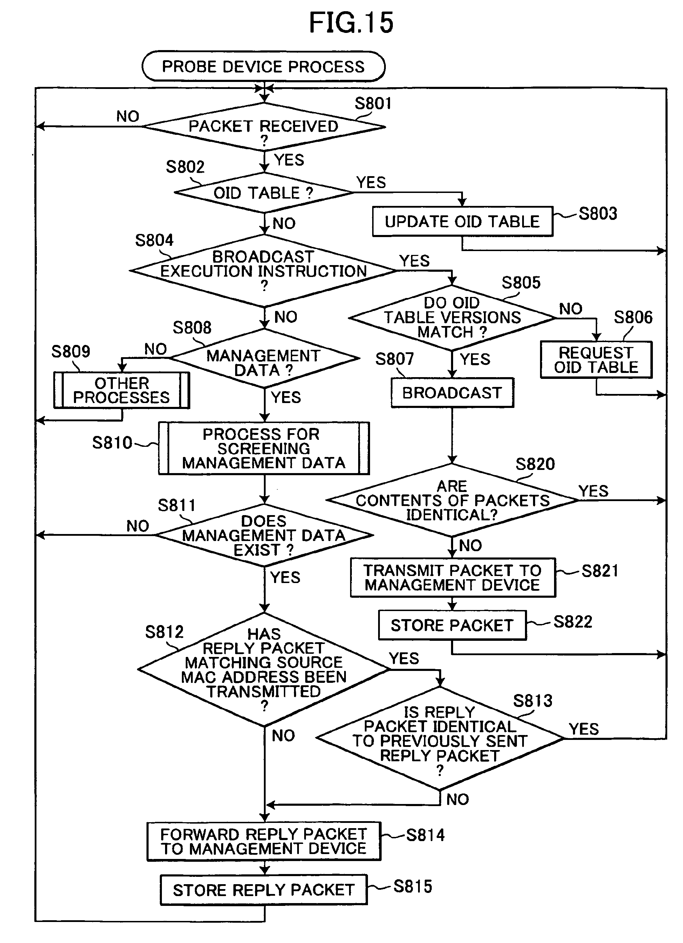

The probe devices 5b-5f shown in Fig. 2(b) are printers, for example, and are configured of a network I/F 30, a CPU 32, a ROM 34, a RAM 36, an HDD 38, and a user I/F 42, a bus 44 having the same functions as those of the management device 3 described above. The probe devices 5b-5f also include a printing unit 40 for printing print data received through the network I/F 30. However, the probe devices 5b-5f are different from the management device 3 with reference to the following points: the ROM 34 stores programs related to a process shown in a flowchart of Fig. 14; the RAM 36 stores an MIB including management data for the probe devices 5b-5f; and the HDD 38 stores programs related to a process indicated in a flowchart of Fig. 15.

The devices a-n shown in Fig. 2(c) are printers, for example, and include a network I/F 50, a CPU 52, a ROM 54, a RAM 56, a printing unit 58, a user I/F 60, and a bus 62 having the same functions as the probe devices 5b-5f. The devices a-n are different from the management device 3 with reference to the following points: the ROM 54 stores a program related to a process shown in the flowchart of Fig. 14; and the RAM 56 stores an MIB including management data for the devices a-n.

While the devices a-n in the preferred embodiment does not include an HDD, each of the devices a-n may be provided with an HDD. Further, while the probe devices 5b-5f and the devices a-n are printers in the preferred embodiment, these devices may be personal computers, scanners, or facsimile machines, as described above.

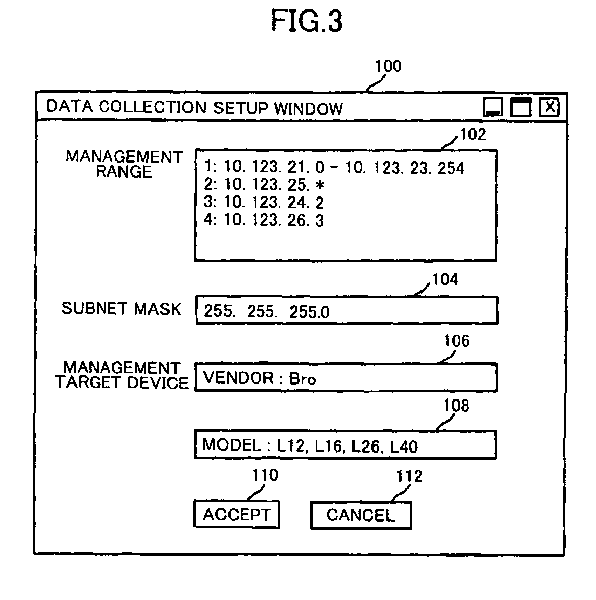

Next, a window for inputting settings used in the device management system of the preferred embodiment will be described with reference to Fig. 3. This window enables the user to set the range of networks to be managed and the types of devices to be managed when the management device 3 is used to manage the probe devices 5b-5f and the devices an.

Fig. 3 shows a Data Collection Setup window displayed on the display 20 of the management device 3. This Data Collection Setup window 100 is configured of a management range space 102, a subnet mask space 104, a vendor name space 106 and a model space 108 for the devices to be managed, an Accept button 110, and a Cancel button 112. The window enables the user to make selections or input data via the user I/F 22 of the management device 3, which includes a keyboard, and a mouse.

The management range space 102 enables the user to set ranges to which a "SNMP GET" packet will be transmitted by entering IP addresses. A total of four ranges have been set in this case. The method of setting the range in the preferred embodiment is to specify the first and last IP address in the range, as in "10.123.21.0-10.123.23.254," or to specify a range that matches a portion of an IP address, as in "10.123.25.*" (where "*" is a wildcard). Accordingly, it is possible to avoid the time-consuming operations of the conventional method for directly inputting each individual IP address assigned to devices to be managed, as in "10.123.24.2" and "10.123.26.3."

The subnet mask space 104 is provided for setting a subnet mask that is used in a process described later for calculating a network address.

The vendor name space 106 is provided for setting a vendor name of the devices to be managed when the user wishes to limit which devices will be managed. The vendor name entered in this space is used in a process described later for sorting out devices to be managed.

The model space 108 is provided for setting a model name for devices to be managed when the user wishes to limit which devices will be managed. The model name entered in this space is used in a process described later for sorting out the devices to be managed.

The Accept button 110 can be pressed to write the settings in spaces 102-108 over the previous settings stored on the HDD 18 and enable these settings. The Cancel button 112 is pressed to make the settings in spaces 102-108 ineffective without saving the settings on the HDD 18 (retaining the previous settings).

Instead of the display 20 of the management device 3, the Data Collection Setup window 100 of Fig. 3 may be displayed on a display provided with a personal computer not shown in the drawings that can be connected to and can communicate with the management device 3. In such a case, it is preferable that settings and inputs for the Data Collection Setup window 100 can be performed using a keyboard or a mouse provided with the personal computer.

Next, a table used when the management device 3 manages the probe devices 5b-5f and the devices a-n provided on the LAN 1 based on SNMP (hereinafter referred to as the OID table) will be described with reference to Fig. 4.

The OID table includes an "OID" column that stores OIDs corresponding to management data (objects), which the management device 3 collects, and a "filter value" column that stores management data (objects) corresponding to each OID, which determine whether the devices are to be treated as targets of management depending on the stored management data. In other words, the management device 3 collects management data (objects) corresponding to four OIDs indicated in the "OID" column in the OID table. However, the management device 3 only collects management data that matches all values in the "filter value" column (corresponding to device conditions in the present invention). With this construction, the management device 3 can narrow down the number of targeted devices even when an enormous number of devices exist on a network, managing the devices efficiently.

This OID table is stored on the HDD 18 and HDD 38 of the management device 3 and probe devices 5b-5f in association with the current version number (a serial number assigned each time the OID table is updated; the version number is 42 for the OID table shown in Fig. 4). As will be described later, this version number is used for determining whether the OID tables stored in the management device 3 and the probe devices 5b-5f match each other. An MIB configured of the OIDs in the OID table of Fig. 4 and the objects corresponding to these OIDs is equivalent to a Print MIB defined by RFC 1759 that is provided for managing printers. The MIB is configured such that an object identifying the vendor name of the printer (generally called a "prtInputVendorName" object) is stored in relation to the "1.3.6.1.2.1.43.8.2.1.14.1" OID in the first line of the OID table; an object identifying the model name of the printer (generally called a "prtInputModel" object) is stored in association with the "1.3.6.1.2.1.43.8.2.1.15.1" OID in the second line of the OID table; an object identifying the number of pages printed by the printer (generally called the "prtMarkerLifeCount" object) is stored in association with the "1.3.6.1.2.1.43.10.2.1.4.1" OID in the third line of the OID table; and an object identifying how many sets of "prtAlert" objects are provided (generally called a "prtAlertIndex" object) is stored in association with the "1.3.6.1.2.1.43.18.1.1.1.1" in the fourth row of the OID table. Here, the "prtAlertIndex" object indicates how many sets of "prtAlert" objects are included after the "1.3.6.1.2.1.43.18" portion in which Out-of-Paper, Paper Jam, and other error data related to the printer are compiled in a database. Accordingly, it is easy to retrieve the current status of printers having a value stored in this "prtAlertIndex" object by transmitting a "SNMP GET" packet specifying the OID of the "prtAlert" object corresponding to the desired error data.

The following is a detailed description of how the OIDs and filter values are associated with each other using the example of the OID table shown in Fig. 4.

As described above, an object identifying the vendor name of the printer is stored in relation to the "1.3.6.1.2.1.43.8.2.1.14.1" in the first line of the OID table. In this example, the filter value "Bro" is associated with this OID. Hence, in the preferred embodiment, only devices having an object corresponding to the OID and including the character array "Bro" in the object corresponding to the OID are treated as devices to be managed, as will be described in greater detail below. The filter value "Bro" corresponding to this OID is set by the user in the vendor name space 106 of the Data Collection Setup window 100 shown in Fig. 3.

As described above, an object identifying the model of the printer is stored in relation to the OID "1.3.6.1.2.1.43.8.2.1.15.1" in the second line of the OID table. In this example, the filter value "L12, L16, L26, L40" is associated with this OID. In other words, in the preferred embodiment, only devices having an object corresponding to the OID and including one of the character arrays "L12," "L16," "L26," and "L40" in the object corresponding to the OID are treated as devices to be managed. The filter value "L12, L16, L26, L40" corresponding to the OID is set by the user in the model space 108 of the Data Collection Setup window 100 shown in Fig. 3.

As described above, an object identifying the number of pages printed on the printer may be stored in relation to the OID "1.3.6.1.2.1.43.10.2.1.4.1" in the third line of the OID table. In this example, a filter value has not been associated with this OID (no filter value has been set). Specifically, in the preferred embodiment, only devices having an object corresponding to the OID are treated as devices to be managed. The devices to be managed are not sorted based on the object corresponding to the OID, as will be described later. If the user wishes to select devices to be managed based on the number of pages printed on the printer, the user may associate a filter value such as "10000" with the OID, for example. In this case, devices having an object corresponding to the OID of 10000 or greater (or 10000 or less) are treated as devices to be managed. In this example, it is preferable to add a new space in the Data Collection Setup window 100 for setting the number of printed pages and to configure the management device 3 to use the value set by the user in this space.

As described above, an object for determining whether a "prtAlert" object is provided is stored in relation to the OID "1.3.6.1.2.1.43.18.1.1.1.1" in the fourth line of the OID table. More specifically, when a "prtAlert" object is provided, a value of one or greater (the number of sets provided) is stored as the object corresponding to the OID. Accordingly, it is determined that a "prtAlert" object is provided if the object obtained when specifying the OID is one or greater. The "prtAlert" object is not provided if the obtained object is less than one. In this case, a filter value for the OID is set as 1. In other words, in the preferred embodiment, only devices having an object corresponding to the OID (only devices set to a value of one or greater) are treated as devices to be managed, as will be described later. When the user does not set a filter value for the OID, the filter value is set to a default value.

Next, the device list stored in the HDD 18 of the management device 3 will be described with reference to Fig. 5. The device list specifies IP addresses of devices to which transmit a "SNMP GET" packet for requesting the transmission of management data (corresponding to the management device 3 and the probe devices 5b-5f, and hereinafter referred to as devices for which management data can be collected). The IP address of the management device 3 is stored in the first line of the device list shown in Fig. 5, the IP address of the probe device 5b in the second line, and the IP address of the probe device 5c in the third line. In the first embodiment, the user registers the device list by entering IP addresses through the user I/F 22 of the management device 3. However, the IP address assigned to the management device 3 can be acquired and entered into the device list, so that the list is registered without the user's entering the IP address. The user may also enter data into this device list through a keyboard or mouse provided on a personal computer (not shown) that can communicate with the management device 3, as well as using the user I/F 22 provided on the management device 3.

Next, the overall process performed on the device management system according to the first embodiment will be described.

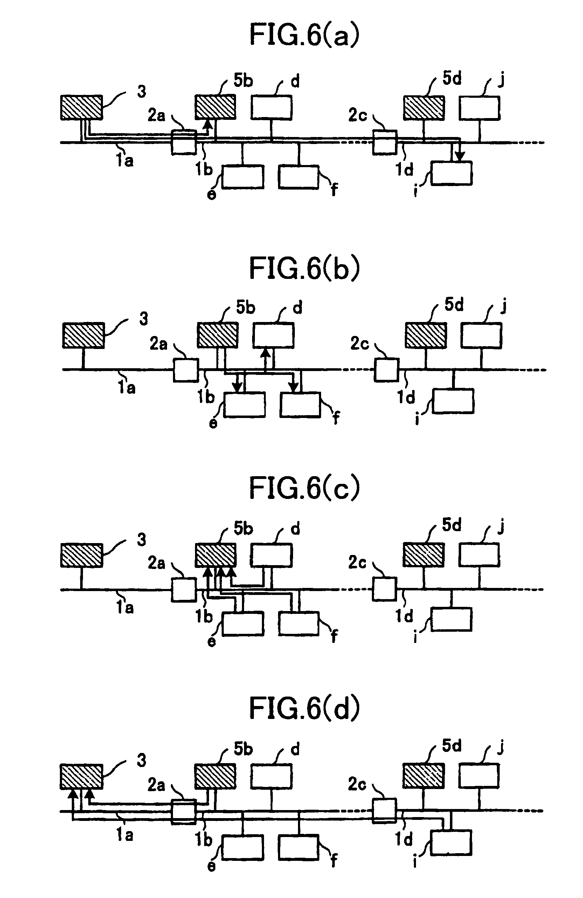

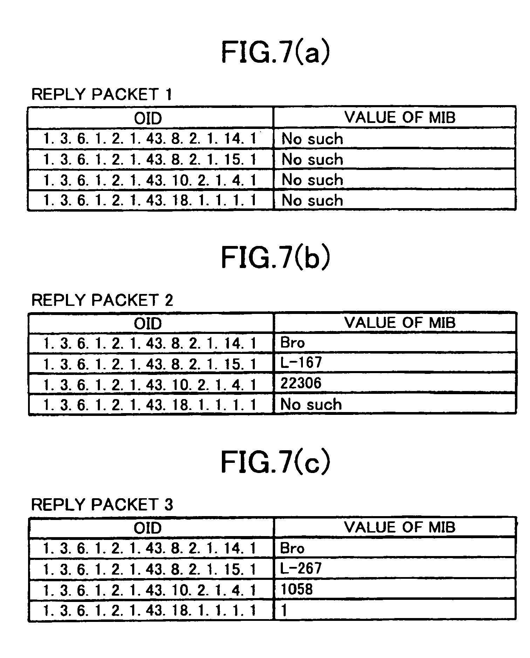

Figs. 6(a)-6(d) are schematic diagrams illustrating the overall process performed on the device management system according to the first embodiment, while Figs. 7(a)-7(c) are explanatory diagrams showing reply packets. In order to facilitate description, Figs. 6(a)-6(d) show only networks 1a, 1b, and 1d on the LAN 1 of Fig. 1. Further, devices a-c connected to the network 1a have been omitted from these drawings.

In the device management system according to the first embodiment, if devices for which management data can be collected exist on a network within the management range set in the management range space 102 when collecting management data (in this example, the probe device 5b is registered in the device list and exists on a network within the management range), a packet requesting the broadcast of a "SNMP GET" packet is transmitted by a unicast from the management device 3 to the probe device 5b beyond the router 2a. Further, when a device for which management data can be collected does not exist on a network in the management range (in this example, no device in the device list exists on the network 1d, and a device i connected to the same network falls within the management range), the management device 3 transmits a "SNMP GET" packet by the unicast to the device i.

Upon receiving the request, the probe device 5b broadcasts the "SNMP GET" packet on the network 1b, as shown in Fig. 6(b). This "SNMP GET" packet holds four OIDs shown in the OID table of Fig. 4.

As shown in Fig. 6(c), each of the devices d-f subsequently send a reply packet ("SNMP REPLY" packet) to the probe device 5b associating each OID with an object based on the OIDs stored in the "SNMP GET" packet.

After the probe device 5b receives the reply packets from the devices d-f, the probe device 5b determines whether the reply packets were received from devices to be managed (whether objects corresponding to the OIDs indicated in the OID table of Fig. 4 exist, and whether the packets meet the conditions of the filter value) and, based on this determination, transmit only the reply packets received from devices to be managed to the management device 3, as shown in Fig. 6(d). In addition, the device i which received a "SNMP GET" packet from the management device 3 by a unicast, transmits a reply packet to the management device 3 associating each OID to an object. While Figs. 6(a)-6(d) illustrate an example in which the probe device 5b is the device for which management data can be collected that exists on a network within the management range, the same process is performed when one of the probe devices 5c-5f is the device for which management data can be collected. Further, if the device entered in the device list and existing on a network within the management range is the management device 3, the management device 3 broadcasts a "SNMP GET" packet on the network 1a without transmitting a packet requesting a broadcast, shown in Fig. 6(a).

Figs. 7(a)-7(c) show examples of reply packets sent from the devices. The reply packet returned from the device that has no object corresponding to the four OIDs described above (having no MIB for the four OIDs) is associated with the object "No such" for each OID constituting the packet, as shown in Fig. 7(a). Since all four OIDs are related to a printer in the first embodiment, the device returning the packet shown in Fig. 7(a) can be made of a personal computer or a scanner which is not shown in the drawings.

The reply packet returned from the devices that do not have objects corresponding to one or more of the four OIDs (do not have an MIB for one or more of the OIDs) is associated with the objects "No such" for the OIDs that do not have an object (the OID in the fourth line in the present example) among the OIDs which form "SNMP REPLY" packets, as shown in Fig. 7(b).

The reply packet returned from the devices provided with all objects corresponding to four OIDs is associated with objects for all OIDs constituting the "SNMP REPLY" packet, as shown in Fig. 7(c).

Hence, in the preferred embodiment, only management data transmitted from devices to be managed is forwarded to the management device 3. Accordingly, the probe device 5b only returns reply packets having management data for devices to be managed to the management device 3. When using this device management system, therefore, the management device can manage desired devices beyond the routers 2a-2e, facilitating efficient device management.

Next, processes performed by the management device 3 in the device management system according to the first embodiment will be described in detail with reference to the flowcharts in Figs. 8-13. The processes shown in Fig. 8-13 are implemented by the CPU 12 of the management device 3 executing programs related to the flowcharts shown in Fig. 8-13.

Fig. 8 is a flowchart related to a first management device process. The process illustrated in this flowchart is executed continuously while power to the management device 3 is turned on.

At the beginning of this first management device process in S101, the CPU 12 starts a timer (not shown) from a time of zero and subsequently advances to S102. The time measured by the timer is used in S104 described later.

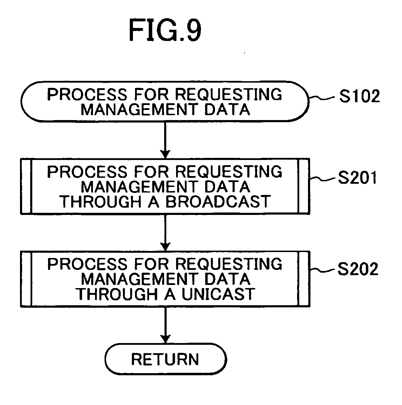

In S102 the CPU 12 executes a process for requesting management data in which a request for the transmission of management data is issued to a device, and subsequently advances to S103. The process for requesting management data in S102 will be described later with reference to Figs. 9-11.

In S103 the CPU 12 resets the timer started in S101, restarting the timer from zero and advances to S104.

In S104 the CPU 12 determines whether ten minutes have elapsed according to the timer. If the CPU 12 determines that ten minutes have elapsed (S104: YES), then the CPU 12 returns to the process for requesting management data in S102 described above. If the CPU 12 determines that ten minutes have not elapsed (S104: NO), then the CPU 12 advances to S105.

In S105 the CPU 12 determines whether the OID table shown in Fig. 4 has been updated. If the OID table has been updated, that is, if the CPU 12 determines that the Accept button 110 in the Data Collection Setup window 100 shown in Fig. 3 was pressed and that the version number of the OID table was incremented (S105: YES), then the CPU 12 advances to S106. However, if the OID table was not updated (S105: NO), then the CPU 12 advances to S107.

In S106 the CPU 12 performs a process to transmit the latest OID table to the probe devices 5b-5f registered in the device list shown in Fig. 5 (the probe device 5b and probe device 5c in Fig. 1) and advances to S107.

In S107 the CPU 12 determines whether the user has requested the display of management data. If a request to display management data has been received from the user, that is, if the CPU 12 determines that a request to display management data on the display 20 was issued via the user I/F 22 of the management device 3 (S107: YES), then the CPU 12 advances to S108. If a display request was not received (S107: NO), then the CPU 12 returns to S104. The request to display management data may also be issued via a keyboard or mouse provided with a personal computer (not shown) that can communicate with the management device 3, as well as via the user I/F 22 provided with the management device 3.

In S108 the CPU 12 performs a process to display management data stored on the HDD 18 of the management device 3 on the display 20, and returns to S104. By viewing management data displayed through the process of S108, the user can determine the status of devices to be managed. Instead of displaying the management data on the display 20 provided with the management device 3, this data may also be displayed on a display provided with a personal computer (not shown) that can communicate with the management device 3.

In the first management device process of Fig. 8 described above, the process for requesting management data in S102 is executed each time ten minutes have elapsed according to the timer (S104: YES). While ten minutes have not elapsed (S104: NO) the CPU 12 executes such processes as confirming updates to the OID table (S105) and confirming requests to display management data (S107).

Next, the process for requesting management data described above (S102) will be described in detail with reference to Figs. 9-11.

In S201 at the beginning of the process for requesting management data (S102) shown in Fig. 9, the CPU 12 executes a process for requesting management data through a broadcast in which a request for the transmission of management data is issued to devices through a broadcast, and subsequently advances to S202.

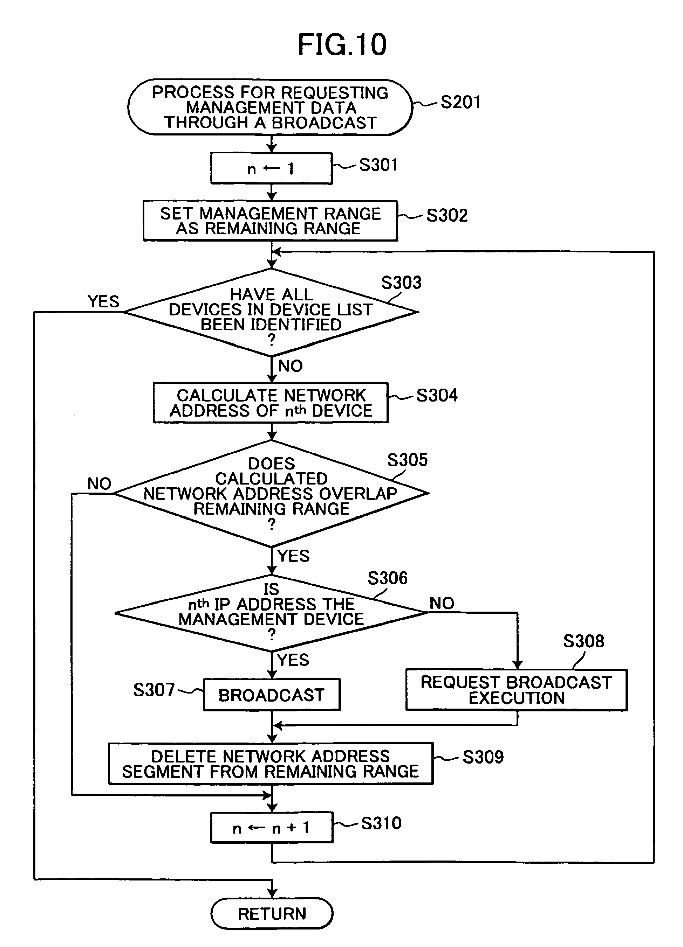

The process for requesting management data through a broadcast (S201) will be described next with reference to Fig. 10.

At the beginning of the process in S301, the CPU 12 sets a counter n stored in the RAM 16 of the management device 3 to "1" and subsequently advances to S302. The counter n functions as a pointer that in subsequent steps is used to identify an IP address of a reference destination from among a plurality of IP addresses in the device list (see Fig. 5).

In S302 the CPU 12 stores the management range stored in the HDD 18 of the management device 3 as a "remaining range" in the RAM 16 of the management device 3 (copies the management range stored in the HDD 18 to the RAM 16) and subsequently advances to S303. The "remaining range" is used in subsequent steps to identify the range of IP addresses to which a request for the transmission of management data has not been issued.

In S303 the CPU 12 determines whether the following process in S304-S310 has been executed for all IP addresses of devices for which management data can be collected, which are listed in the device list (Fig. 5). If the CPU 12 determines that the following process has been executed for all IP addresses (S303: YES), then the current process for requesting management data through a broadcast ends and the CPU 12 advances to S202 in Fig. 9. However, if the CPU 12 determines that the following process has not been executed for all IP addresses (S303: NO), then the CPU 12 advances to S304.

In S304 the CPU 12 calculates the network address for the IP address listed in the n^{th} line from the top in the device list (Fig. 5) based on the subnet mask set in the subnet mask space 104 of the Data Collection Setup window 100, and subsequently advances to S305. For example, if the IP address "10.123.21.1" is entered in the n^{th} line from the top of the device list shown in Fig. 5 and the subnet mask "255.255.255.0" has been set in the subnet mask space 104 shown in Fig. 3, then the network address calculated in this process (S304) is "10.123.21.0."

In S305 the CPU 12 determines whether the network address calculated in S304 falls within the remaining range stored in the RAM 16. If the network address falls within the remaining range (S305: YES), then the CPU 12 advances to S306. However, if the CPU 12 determines that the network address does not fall within this range (S305: NO), then the CPU 12 advances to S310. For example, if the network address "10.123.21.0" was calculated in S304 and the remaining range stored in the RAM 16 is "10.123.21.0-10.123.23.254," then the network address and the remaining range overlap in the range "10.123.21.0-10.123.21.255." Accordingly, the CPU 12 determines in S305 that the network address and the remaining range overlap (S305: YES).

In S306 the CPU 12 determines whether the n^{th} IP address is the IP address of the management device 3. If the CPU 12 determines that the n^{th} IP address is the IP address of the management device 3 (S306: YES), then the CPU 12 advances to S307. If not (S306: NO), the CPU 12 advances to S308.

In S307 the CPU 12 broadcasts a "SNMP GET" packet specifying the four OIDs in the OID table of Fig. 4 over its own network 1a (transmits a broadcast packet specifying the destination IP address 255.255.255.255) and advances to S309.

In S308 the CPU 12 transmits a packet with a request to broadcast a "SNMP GET" packet specifying the four OIDs (a packet containing the version number of the OID table shown in Fig. 4 and a request to execute a broadcast) by unicast to the n^{th} IP address, and advances to S309. As will be described in detail later, after receiving the request to execute a broadcast, the probe devices 5b-5f broadcast a "SNMP GET" packet specifying the four OIDs over the networks 1b-1f to which the probe devices 5b-5f are connected in response to the request.

In S309 the CPU 12 deletes the network address calculated in S304 from the remaining range stored in the RAM 16 and advances to S310. That is, the CPU 12 deletes the network address for which the broadcast of a "SNMP GET" packet was executed in S307 or the network address for which a request to broadcast a "SNMP GET" packet was issued to the probe devices 5b-5f in S308. For example, if the network address "10.123.21.0" was calculated in S304 and the remaining range stored in the RAM 16 is "10.123.21.0-10.123.23.254," then in S309 the network address portion "10.123.21.0" is deleted from the remaining range stored in the RAM 16. As a result, the remaining range stored in the RAM 16 is changed to "10.123.22.0-10.123.23.254," and steps S305 and S309 are performed based on this new remaining range thereafter.

In S310 the CPU 12 increments the counter n by one and returns to S303.

As described above in the process for requesting management data through a broadcast shown in Fig. 10, the CPU 12 sequentially confirms each IP address listed in the device list (Fig. 5; S310). If a device for which management data can be collected exists in the remaining range (S305: YES), then a "SNMP GET" packet is transmitted by broadcast to this device (the management device 3 or the probe devices 5b-5f; S307 and S308).

Next, the process from S202 in Fig. 9 will be described.

In S202 the CPU 12 executes a process for requesting management data through a unicast in which a request to transmit management data is issued to a device using unicast. After completing this process, the CPU 12 advances to S103 in Fig. 8.

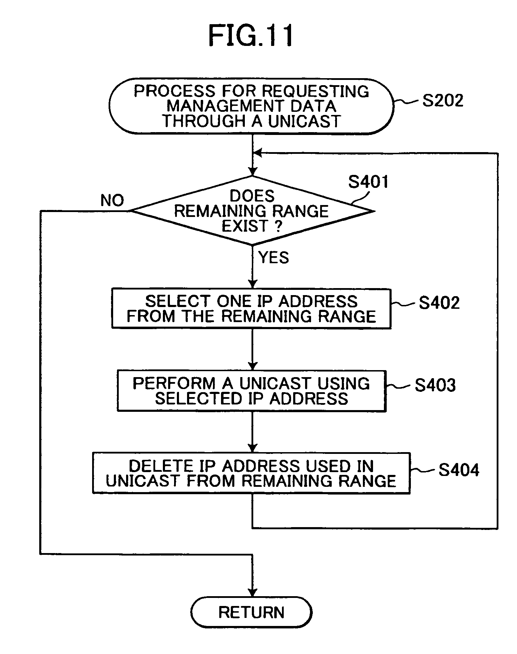

Here, the process for requesting management data through a unicast (S202) will be described with reference to Fig. 11.

In S401 at the beginning of the process (S202), the CPU 12 determines whether a remaining range exists in the RAM 16, that is, whether a management range exists for which a request to transmit management data through a broadcast has not been performed. If a remaining range exists (S401: YES), then the CPU 12 advances to S402. If a remaining range does not exist (S401: NO), then the process for requesting management data through a unicast ends, the process for requesting management data of Fig. 9 ends, and the CPU 12 advances to S103 in Fig. 8.

In S402 the CPU 12 selects a single IP address from within the remaining range stored in the RAM 16 and subsequently advances to S403.

In S403 the CPU 12 transmits a "SNMP GET" packet by unicast to the IP address selected in S402, and subsequently advances to S404.

In S404 the CPU 12 deletes the IP address for which a unicast was performed in S403 from the remaining range stored in the RAM 16, and subsequently returns to S401.

In the process for requesting management data through a unicast described above in Fig. 11, the CPU 12 repeats the processes for transmitting a "SNMP GET" packet by unicast to an IP address in the remaining range (S402 and S403) until the remaining range no longer exists (S401 and S404).

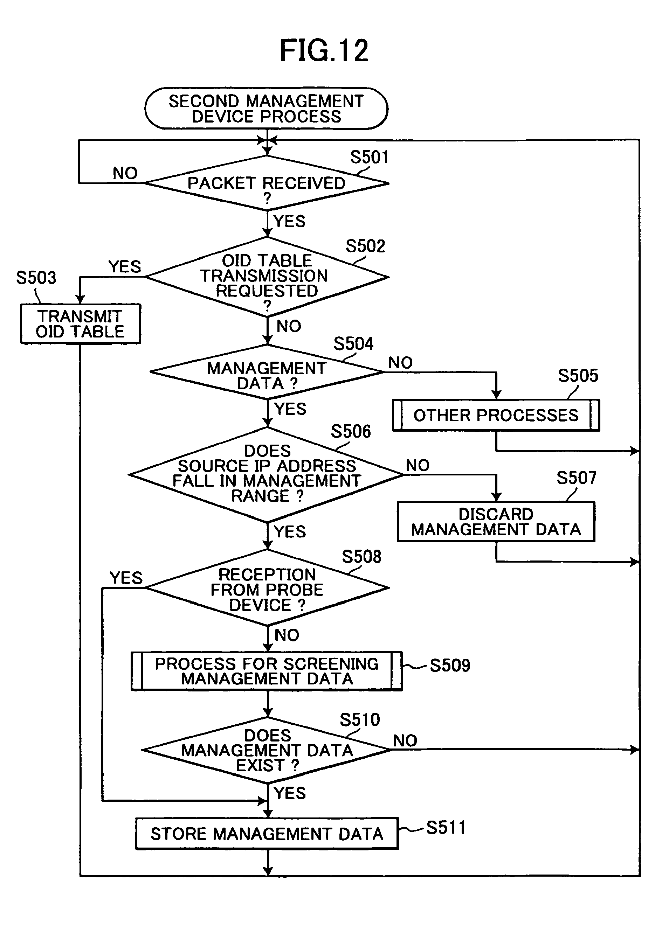

Next, a second management device process will be described with reference to the flowchart in Fig. 12. Like the first management device process (Fig. 8), the second management device process illustrated in the flowchart of Fig. 12 is continuously executed while power to the management device 3 is turned on. Further, the first and second management device processes are performed simultaneously and independent of each other.

In S501 at the beginning of the second management device process, the CPU 12 determines whether a packet has been received via the network I/F 10. If the CPU 12 determines that a packet has not been received (S501: NO), then the CPU 12 returns to S501 and continues to monitor the reception of packets. When the CPU 12 determines that a packet has been received (S501: YES), then the CPU 12 advances to S502.

In S502 the CPU 12 determines whether the content of the packet determined to be received in S501 requests the transmission of an OID table. If the CPU 12 determines that the content of the packet requests transmission of the OID table (S502: YES), then the CPU 12 advances to S503. If not (S502: NO), the CPU 12 advances to S504. Packets having content requesting the transmission of the OID table are packets that the probe devices 5b-5f transmit to the management device 3 in a process described later that is performed by the probe devices 5b-5f.

In S503 the CPU 12 transmits the latest OID table stored on the HDD 18 by unicast to the probe device 5b-5f that requested the table, and subsequently returns to S501 to continue monitoring the reception of packets.

In S504 the CPU 12 determines whether the packet determined to be received in S501 holds management data. If the CPU 12 determines that the packet does not hold management data (S504: NO), then in S505 the CPU 12 executes another process corresponding to the packet and subsequently returns to S501 to continue monitoring the reception of packets. However, if the CPU 12 determines that the packet holds management data (S504: YES), then the CPU 12 advances to S506. Here, packets that hold management data correspond to "SNMP REPLY" packets that are transmitted from devices in response to the transmission of the aforementioned "SNMP GET" packet.

In S506 the CPU 12 identifies from the content of the packet the source IP address for the management data, that is, the IP address of a device that transmitted a "SNMP REPLY" packet in response to a "SNMP GET" packet, and determines whether the IP address falls within the management range stored on the HDD 18. If the CPU 12 determines that the IP address does not fall within the management range (S506: NO), then the CPU 12 advances to S507. However, if the CPU 12 determines that the IP address falls within the management range (S506: YES), then the CPU 12 advances to S508. Since there is no need to collect management data outside of the management range, the process in S506 determines after determining whether the management data should be collected based on the management range and decides subsequent processes.

In S507 the CPU 12 discards the management data received above and returns to S501 to continue monitoring the reception of packets.

In S508 the CPU 12 determines whether the packet received above was transmitted from one of the probe devices 5b-5f. If the packet was determined to be received from one of the probe devices 5b-5f (S508: YES), then the CPU 12 advances to S511. If not (S508: NO), then the CPU 12 advances to S509. As will be described later, a process essentially identical to a process to screen management data (S509) described below is also performed in the probe devices 5b-5f in the first embodiment. Accordingly, the process of S508 prevents unnecessary and redundant execution of the process to screen management data.

In S509 the CPU 12 performs the process to screen management data and subsequently advances to S510.

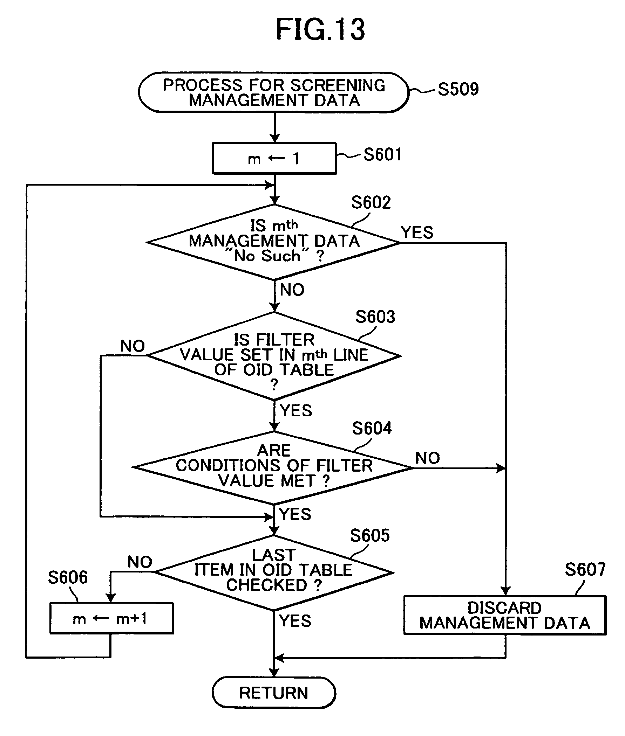

Here, the process to screen management data (S509) will be described with reference to Fig. 13.

In S601 at the beginning of the process to screen management data, the CPU 12 sets a counter m stored in the RAM 16 of the management device 3 to "1" and advances to S602. The counter m functions as a pointer that in subsequent processes, and is used to identify a reference position in the OID table of Fig. 4 and a reference position in the reply packets shown in Figs. 7(a)-7(c).

In S602 the CPU 12 determines whether the OID in the m^{th} line from the top in the reply packet is a "No such" object among the reply packets received from a device in response to the aforementioned "SNMP GET" packet (see Figs. 7(a)-7(c)). If the CPU 12 determines that the object associated with the m^{th} OID is "No such" (S602: YES), then the CPU 12 advances to S607. If the CPU 12 determines that the object is not "No such" (S602: NO), then the CPU 12 advances to S603.

In S603 the CPU 12 determines whether a filter value has been set for the OID in the m^{th} line from the top of the OID table in Fig. 4 (whether the space is blank or not). If the CPU 12 determines that a filter value has been set (S603: YES), then the CPU 12 advances to S604. If the CPU 12 determines that a filter value has not been set (S603: NO), then the CPU 12 advances to S605.

In S604 the CPU 12 determines whether the object in the m^{th} line from the top of the reply packet satisfies the condition specified by the filter value in the m^{th} line from the top of the OID table. If the CPU 12 determines that the condition has been satisfied (S604: YES), then the CPU 12 advances to S605. If the CPU 12 determines that the condition has not been satisfied (S604: NO), then the CPU 12 advances to S607. In other words, in S604 the CPU 12 confirms the object stored in the reply packet, identifies the vendor name, and model, and determines whether the device corresponds to a device to be managed.

In S605 the CPU 12 determines based on the counter m whether all entries in the OID table have been checked, that is, whether the process of S602-S604 has been performed for all entries in the OID table. (In the sample OID table shown in Fig. 4, the determination is based on whether the counter m is four.) If all entries in the table have been checked (S605: YES), the CPU 12 ends the process to screen management data and advances to S510 in Fig. 12. However, if not all entries have been checked in the OID table (S605: NO), then the CPU 12 advances to S606.

In S606 the CPU 12 increments the counter m by one and returns to S602.

In S607 the CPU 12 discards the management data, that is, the reply packet received above, ends the process to screen management data, and advances to S510 in Fig. 12. Hence, the process for screening management data shown in Fig. 13 sorts out packets storing "No such" for the specified OID (S602: YES) and packets whose objects corresponding to the specified OID do not satisfy the condition identified by the filter value (S604: NO) and discards these packets (S607).

Next, a description of the process shown in Fig. 12 will be resumed from S510.

In S510 the CPU 12 determines whether management data was discarded in S607 described above when the process to screen management data (S509) was performed. If the CPU 12 determines that management data remains (S510: YES), then the CPU 12 advances to S511. However, if the CPU 12 determines that the management data was discarded (S510: NO), then the CPU 12 returns to S501 and continues monitoring the reception of packets.

In S511 the CPU 12 stores the received management data on the HDD 18 and returns to S501 to continue monitoring the reception of packets.

Next, a device process will be described with reference to Fig. 14. The device process is performed in devices to be managed (devices a-n and probe devices 5b-5f) in the device management system according to the first embodiment. The device process shown in Fig. 14 is implemented by one of the CPUs 52a-52n of the corresponding devices a-n or one of the CPUs 32b-32f of the corresponding probe devices 5b-5f executing a program related to the flowchart of Fig. 14.

In S701 at the beginning of the device process, the CPU determines whether a packet was received via the relevant network I/F 30b-30f or 50a-50n. If the CPU determines that a packet was not received (S701: NO), then the CPU returns to S701 and continues to monitor the reception of packets. If the CPU determines that a packet was received (S701: YES), then the CPU advances to S702.

In S702 the CPU determines whether the packet whose reception was determined in S701 is a "SNMP GET" packet transmitted from the management device 3 or the probe devices 5b-5f. If the CPU determines that the received packet is a "SNMP GET" packet (S702: YES), then the CPU advances to S703. If not (S702: NO), then the CPU advances to S704, executes another process corresponding to the packet, and returns to S701 to continue monitoring the reception of packets.

In S703 the CPU reads management data (objects) corresponding to the four OIDs stored in the "SNMP GET" packet from the MIB stored in the RAM 56. The CPU creates a "SNMP REPLY" packet that holds the management data read above, and transmits this "SNMP REPLY" packet (see Figs. 7(a)-7(c)) to the source of the "SNMP GET" packet. Subsequently, the CPU returns to S701 to continue monitoring the reception of packets.

Next, a probe device process performed on the probe devices 5b-5f in the device management system according to the first embodiment will be described in detail with reference to Fig. 15. The probe device process shown in Fig. 15 is implemented by one of the CPUs 32b-32f of the corresponding probe devices 5b-5f executing a program related to the flowchart of Fig. 15.

In S801 at the beginning of the probe device process, the CPU 32 determines whether a packet has been received via the relevant network I/F 30b-30f. If the CPU 32 determines that a packet has not been received (S801: NO), then the CPU 32 returns to S801 to continue monitoring the reception of packets. When the CPU 32 determines that a packet has been received (S801: YES), then the CPU 32 advances to S802.

In S802 the CPU 32 determines whether the packet whose reception was determined in S801 holds an OID table transmitted by the management device 3 in S106 (Fig. 8) or S503 (Fig. 12). If the CPU 32 determines that the packet holds an OID table (S802: YES), then the CPU 32 advances to S803, updates the OID table stored on the HDD 38, and returns to S801 to continue monitoring the reception of packets. However, if the CPU 32 determines that the packet does not hold an OID table (S802: NO), then the CPU 32 advances to S804.

In S804 the CPU 32 determines whether the packet whose reception was determined in S801 holds a request to broadcast a "SNMP GET" packet transmitted by the management device 3 in S308 (Fig. 10)..If the CPU 32 determines that the packet holds a broadcast request (S804: YES), then the CPU 32 advances to S805. If not (S804: NO), the CPU 32 advances to S808.

In S805 the CPU 32 determines whether the version number of the OID table stored in the packet matches the version number of the OID table stored on the HDD 38. If the CPU 32 determines that the version numbers do not match (S805: NO), then the CPU 32 advances to S806. If the CPU 32 determines that the version numbers match (S805: YES), then the CPU 32 advances to S807.

In S806 the CPU 32 transmits a packet to the management device 3 requesting the transmission of the latest OID table, and subsequently returns to S801 to continue monitoring the reception of packets. Upon receiving the packet transmitted in S806, the management device 3 transmits the latest OID table in S503 (Fig. 12). This process prevents a discrepancy from occurring in the OID table possessed by the management device 3 and the OID table possessed by the probe devices 5b-5f.

In S807 the CPU 32 broadcasts the "SNMP GET" packet holding the four OIDs listed in the OID table stored on the HDD 38 over the network to which the probe device itself is connected (transmits a packet with the destination IP address set to 255.255.255.255). Subsequently, the CPU 32 performs one or all of the steps S820-S822 described later and returns to S801 to continue monitoring the reception of packets.

In S808 the CPU 32 determines whether the packet whose reception was determined in S801 holds management data. If the CPU 32 determines that the packet does not hold management data (S808: NO), then the CPU 32 advances to S809, executes another process corresponding to the packet, and returns to S801 to continue monitoring the reception of packets. However, if the CPU 32 determines that the packet holds management data (S808: YES), then the CPU 32 advances to S810.

In S810 the CPU 32 executes a process essentially identical to the above-described process for screening management data executed by the management device 3 (S509 of Fig. 12 and Fig. 13). After screening and discarding packets holding "No such" for the specified OID and packets whose objects corresponding to the specified OID do not satisfy conditions specified by the filter value, the CPU 32 advances to S811. Here, the process for screening management data executed by the management device 3 differs from the process for screening management data executed by the probe devices 5b-5f in that the process executed by the management device 3 stores the counter m in the RAM 16 and references the OID table stored on the HDD 18, while the process executed by the probe devices 5b-5f stores the counter m in the RAM 36 and references the OID table stored on the HDD 38. However, since the flows of the processes themselves are identical, a detailed description of this process has been omitted for simplification.

In S811 the CPU 32 determines whether management data was discarded as a result of the process for screening management data (S810). If the CPU 32 determines that the management data remains (S811: YES), then the CPU 32 advances to S812. If the CPU 32 determines that the management data was discarded (S811: NO), then the CPU 32 returns to S801 to continue monitoring the reception of packets. Through the processes of S810 and S811, unnecessary management data that does not match the content of the OID table is discarded and not transmitted to the management device 3, making it possible to reduce the number of unnecessary transmissions and receptions of management data. If this effect is unnecessary, the process may be configured without these steps (both steps may be deleted). If both steps are deleted, then the management device 3 cannot skip the process for screening management data (S509). Accordingly, S508 in the second management device process (Fig. 12) must be deleted.

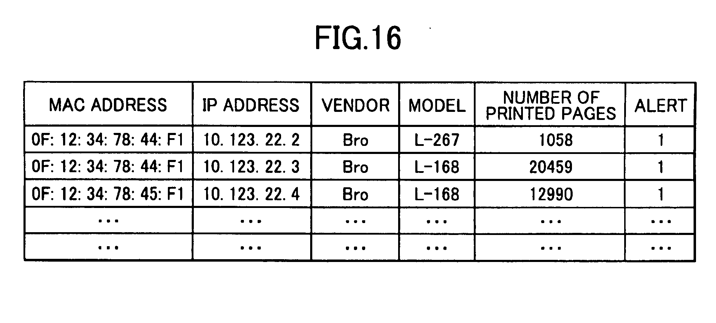

In S812 the CPU 32 determines whether management data for a device having the source MAC address was already transmitted to the management device 3 based on whether the source MAC address of the packet whose reception was determined in S801 is stored on the HDD 38. If the CPU 32 determines that the management data was transmitted to the management device 3 previously (S812: YES), then the CPU 32 advances to S813. If not (S812: NO), then the CPU 32 advances to S814. Specifically, the content of reply packets previously transferred to the management device 3 are stored on the HDD 38 of the probe devices 5b-5f, as shown in Fig. 16. Here, such data as the IP address associated with the MAC address assigned to the reply packet, the vendor name (corresponding to the first line in the OID table of Fig. 4), the model name (corresponding to the second line of the OID table), the number of printed pages (corresponding to the third line of the OID table), and the number of "prtAlert" objects possessed (corresponding to the fourth line of the OID table) are listed.

In S813 the CPU 32 compares the content of the current received packet to the content of the packet stored on the HDD 38 (Fig. 16) and determines whether all data including the vendor name, the model, the number of printed pages, and alert data match. If the CPU 32 determines that the data match (S813: YES), then the CPU 32 returns to S801 and continues to monitor the reception of packets. However, if the CPU 32 determines that the data do not match (S813: NO), then the CPU 32 advances to S814. Hence, this process prevents management data identical to that transmitted previously to the management device 3 (management data having no change from the previously transmitted data) from being transmitted twice. By performing the steps S812 and S813, it is possible to reduce the number of unnecessary transmissions and receptions of management data. However, if this effect is unnecessary, the process may be configured so as not to execute these steps (both steps may be deleted).

In S814 the CPU 32 transmits the reply packet to the management device 3 and advances to S815.

In S815 the CPU 32 stores the content of the reply packet on the HDD 38 of the probe devices 5b-5f (after updating the data shown in Fig. 16) and returns to S801 to continue monitoring the reception of packets.

Further, since the probe devices 5b-5f themselves are devices to be managed in the preferred embodiment, management data for the probe devices 5b-5f must be transmitted to the management device 3. Accordingly, after the "SNMP GET" packet is broadcast in S807 as described above, the following process similar to S813-S815 is executed in S820-S822.

Specifically, the content of packets (IP address, vendor name, model, number of printed pages, etc.) that the probe devices 5b-5f previously transmitted to the management device 3 is stored on the HDD 38 of the probe devices 5b-5f, as that shown in Fig. 16. For example, data for the probe devices 5b-5f may be added to the data in Fig. 16 or a separate storage area may be allocated for the probe devices 5b-5f. In S820 the CPU 32 compares the current management data in the MIB stored in the RAM 36 to the content of the packets stored on the HDD 38 and then determines whether all data, including the vendor name, model, number of printed pages, and alert data, match. If the CPU 32 determines that all data match (S820: YES), then the CPU 32 returns to S801 and continues monitoring the reception of data. If the CPU 32 determines that the data do not match (S820: NO), then the CPU 32 advances to S821. Hence, this process prevents management data identical to data previously transmitted to the management device 3 (management data having no change from the previously transmitted data) from being transmitted twice. By performing the process in S820, it is possible to reduce the number of unnecessary transmissions and receptions of management data. However, if this effect is unnecessary, the process may be reconfigured so as not to execute these steps (both steps may be deleted).

In S821 the CPU 32 transmits the packet holding management data to the management device 3 and advances to S822.

In S822 the CPU 32 stores the content of the packet transmitted in S821 on the HDD 38 of the probe devices 5b-5f and then returns to S801 to continue monitoring the reception of packets.

The following effects are achieved when the devices connected to the aforementioned intra-office LAN are managed by using the device management system according to the first embodiment described above.

When the device management system according to the first embodiment is used, devices to be managed that are connected to the networks 1b-1f can be managed by the management device 3 connected to the network 1a. This management can be achieved even when the networks 1b-1f are connected to the network 1a via the routers 2a-2e that do not allow a broadcast performed on one network to pass to another network, without performing troublesome operations such as inputting individual IP addresses for all devices to be managed that exist on the network beyond the routers 2a-2e.

In the device management system according to the first embodiment, the management device 3 transmits the OID table (Fig. 4) to the probe devices 5b-5f in S106 (Fig. 8) or S503 (Fig. 12), and only reply packets possessing management data that matches conditions identified by filter values in the OID table are transferred to the management device 3. Therefore, unnecessary reply packets are not transferred from the probe devices 5b-5f to the management device 3, achieving the effects of lightening the processing load on the management device 3 and suppressing traffic increases on the network.

Further, since the device management system brings the devices capable of collecting management data to broadcast a "SNMP GET" packet, the device management system according to the first embodiment can collect management data more efficiently than when a "SNMP GET" packet is transmitted individually by unicast.

### Second Embodiment

Next, a second embodiment according to the present invention will be described.

Components in the second embodiment that are identical to those in the first embodiment have been designated with the same reference numerals to avoid duplicating description. The following description focuses on points that are different from those of the first embodiment. The first and second embodiments differ in the process for requesting management data through a unicast described above in the following way. In the first embodiment described above, the management device 3 transmits packets individually by unicast (see Fig. 11) to devices in the "remaining range" that were not issued requests to transmit management data through a broadcast. However, in the second embodiment, the one of the management device 3 and the probe devices 5b-5f that is closest to the device set as the unicast destination in terms of network distance (a distance calculated based on the number of routers between networks) performs the unicast transmission.

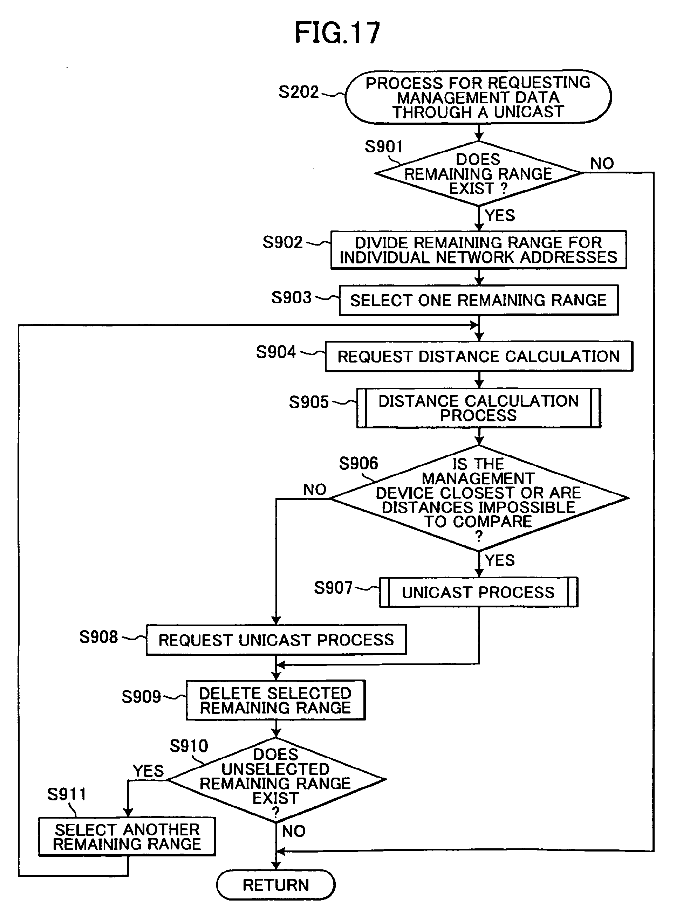

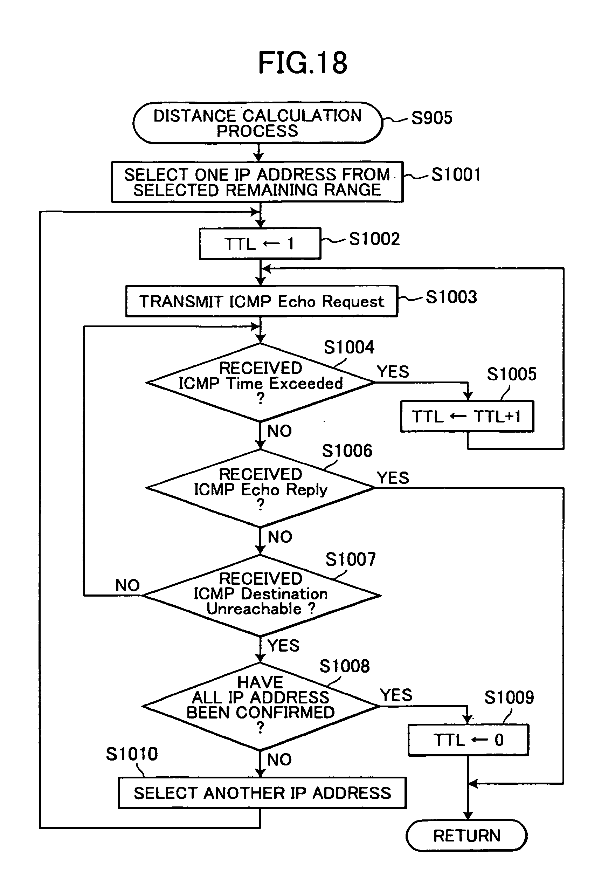

Next, the process for requesting management data through a unicast according to the second embodiment will be described in detail with reference to Figs. 17-18. The process shown in Figs. 17 and 18 is executed in place of the process for requesting management data through a unicast according to the first embodiment shown in Fig. 11.

In S901 at the beginning of the process for requesting management data through a unicast (S202), the CPU 12 determines whether a remaining range exists in the RAM 16, that is, whether there exists a management range of devices to which a request for the transmission of management data was not broadcasted. If a remaining range exists (S901: YES), then the CPU 12 advances to S902. If a remaining range does not exist (S901: NO), the CPU 12 ends the process for requesting management data through a unicast, ends the process for requesting management data in Fig. 9, and advances to S103 in Fig. 8.

In S902 the CPU 12 divides the remaining range for individual network addresses and advances to S903. For example, if the remaining range is "10.123.25.0-10.123.26.255" and the subnet mask is "255.255.255.0," then the range is divided into "10.123.25.0-10.123.25.255" and "10.123.26.0-10.123.26.255."

In S903 the CPU 12 selects one of the ranges from the remaining ranges divided in S902 and advances to S904.

In S904 the CPU 12 issues a request to each of the probe devices 5b-5f entered in the device list (Fig. 5) to execute a process for calculating the distance between the networks 1a-1f in the remaining range selected in S903 and the probe devices 5b-5f itself (distance calculation process) and to return the result of the calculation, and advances to S905. The distance calculation process executed by the probe devices 5b-5f is essentially the same as the distance calculation process executed by the management device 3 in S905 described below. Further, the request issued by the management device 3 in S904 to the probe devices 5b-5f is handled in the "other processes" (S809) of the probe device process described above (see Fig. 15). Hence, the distance calculation process and replies with the result of the distance calculation process are performed in the other processes (S809).

In S905 the CPU 12 executes the distance calculation process and advances to S906.

Here, the distance calculation process performed in S905 will be described with reference to Fig. 18.

In S1001 at the beginning of the distance calculation process (S905), the CPU 12 selects one IP address from the remaining range selected in S903 described above, and advances to S1002.

In S1002 the CPU 12 executes a process to set a counter TTL stored in the RAM 16 of the management device 3 to "1" and subsequently advances to S1003. In a later process, the value set for the counter TTL is stored in the header portion of a packet and used as a survival time (time to live) of the packet or, more specifically, the number of hops that the packet can survive (number of times routers can transfer the packet). For this process, each router is provided with a function for decrementing the value of the counter TTL stored in the header portion of a received packet by one, then forwarding the packet to the next router when the counter value is not zero, or determining that the lifetime of the packet has ended when the value is zero and discarding the packet. The router is also provided with a function for transmitting an ICMP Time Exceeded packet to the source of the transmission when a packet is discarded, notifying the source that the packet has been discarded. The aforementioned functions possessed by the routers are used in the distance calculation process. The distance between networks is calculated by testing whether communication is possible with a network device assigned a desired IP address using an ICMP Echo Request packet specifying the desired IP address, while gradually increasing the survival time of the packet (counter TTL), and identifying the counter TTL when an ICMP Time Exceeded packet is no longer received (when an ICMP Echo Reply packet is received from the network device assigned the desired IP address, that is, when communication is possible with the network device). Hence, a larger value for the counter TTL indicates a larger number of routers between networks and, therefore, a greater distance between networks. The ICMP (Internet Control Message Protocol) described above is a protocol well known in the art for diagnosing packet error notification and communication status. ICMP is defined in RFC 792, and a detailed description is not included here.

In S1003 the CPU 12 transmits an ICMP Echo Request packet associated with the counter TTL value to the IP address selected in S1001 and subsequently advances to S1004.

In S1004 the CPU 12 determines whether the aforementioned ICMP Time Exceeded packet was received from the router. If the CPU 12 determines that this packet was received (S1004: YES), then the CPU 12 retransmits the ICMP Echo Request packet with the counter TTL incremented by one (S1005 and S1003). However, if the CPU 12 determines that an ICMP Time Exceeded packet was not received (S1004: NO), then the CPU 12 advances to S1006.

In S1006 the CPU 12 determines whether an ICMP Echo Reply packet was received from the transmission destination for the ICMP Echo Request packet transmitted in S1003. If the CPU 12 determines that such a packet was received (S1006: YES), then the CPU 12 ends the distance calculation process and advances to S906 in Fig. 17. However, if the CPU 12 determines that such a packet was not received (S1006: NO), then the CPU 12 advances to S1007. When the CPU 12 determines in S1006 that an ICMP Echo Reply packet was received (S1006: YES), the value of the counter TTL set at this time corresponds to the distance between networks.

In S1007 the CPU 12 determines whether an ICMP Destination Unreachable packet (a packet transmitted by a router when communication is not possible because of that the power supply to the network device assigned the specified IP address is not performed) was received from the router. If the CPU 12 determines that such a packet was received (S1007: YES), then the CPU 12 advances to S1008. If the CPU 12 determines that such a packet was not received (S1007: NO), then the CPU 12 returns to S1004.

In S1008 the CPU 12 determines whether the process of S1002-S1007 has been performed for all IP addresses in the remaining range selected in S1001. If the CPU 12 determines that the process has been performed for all IP addresses (S1008: YES), then the CPU 12 resets the counter TTL to zero in S1009, ends the distance calculation process, and advances to S906 in Fig. 17. However, if the CPU 12 determines that the process has not been performed for all IP addresses (S1008: NO), then in S1010 the CPU 12 selects another IP address from the remaining range that has not yet been selected and returns to S1002. If the CPU 12 determines in S1008 that the process of S1002-S1007 was executed for all IP addresses in the remaining range (S1008: YES), then the counter TTL is reset to zero (S1009). The action at S1009 indicates that the distance between networks could not be calculated.

The probe devices 5b-5f also perform a process essentially identical to the distance calculation process described above. More specifically, the distance calculation process is executed in the "other processes" (S809) of the probe device process (see Fig. 15) executed by the probe devices 5b-5f. In this process, the remaining range required in S1001 is specified by the management device 3 in the process of S904 in Fig. 17. Further, the counter TTL required in S1002 is provided in the HDD 38 of the probe devices 5b-5f. The probe devices 5b-5f also transmit the value of the counter TTL obtained in the distance calculation process to the management device 3 in the same "other processes" (S809). The value of the counter TTL transmitted from the probe devices 5b-5f to the management device 3 is received by the management device 3 in the "other processes" (S505) of the second management device process (see Fig. 12).

Next, a description of the process in Fig. 17 will be resumed from S906.

In S906 the CPU 12 confirms which device has the shortest network distance to the targeted remaining range (network) based on the results of the distance calculation process executed by the management device 3 and the probe devices 5b-5f (confirms which device has the smallest counter TTL value, excluding devices with a counter TTL value of zero) and determines whether the device with the shortest distance between networks is itself (the management device 3). If the CPU 12 determines that the management device 3 is closest (S906: YES), then the CPU 12 advances to S907. If not (S906: NO), then the CPU 12 advances to S908. If the distance between networks cannot be compared for any reason, such as the values of all counters TTL being zero or the values of all counters TTL being equal (S906: YES), then the CPU 12 advances to S907.

In S907 the CPU 12 performs a process to transmit a "SNMP GET" packet specifying the four OIDs stored in the OID table (see Fig. 4) individually by unicast to each IP address in the remaining range selected in S903 or S911 described later and advances to S909. The process in S909 is substantially the same as the process described above in Fig. 11 and, therefore, a detailed description of this process will be omitted.

In S908 the CPU 12 issues a request to the probe device 5b-5f that is closest to the network in the remaining range (has the smallest counter TTL value) to perform the same process described above in S907, that is, to transmit "SNMP GET" packets individually by unicast to each IP address in the remaining range, and advances to S909. Upon receiving the request through the process of S908, the probe device 5b-5f executes the same process described in S907 in the "other processes" (S809) of the probe device process (see Fig. 15).

In S909 the CPU 12 deletes the remaining range selected in S903 or S911 described later, that is, deletes the remaining range for which the processes in S907 or S908 were performed, and advances to S910.

In S910 the CPU 12 determines whether any of the remaining ranges divided in S902 have not been selected in S903 or S911 described later. If any of the remaining ranges have not yet been selected (S910: YES), then the CPU 12 advances to S911, selects any one remaining range from among the remaining ranges not yet selected, and returns to S904. However, if the CPU 12 determines that there are no remaining ranges left that have not been selected (S910: NO), then the CPU 12 ends the process for requesting management data through a unicast, ends the process for requesting management data in Fig. 9, and advances to S103 in Fig. 8.

As described above, the probe devices 5b-5f receiving a request through the process of S908 executes a process identical to that in S907 in the "other processes" (S809) of the probe device process (see Fig. 15). However, a process similar to S820-S822 described above may be performed at this time instead. In other words, upon receiving a request through the process of S908, the probe devices 5b-5f may execute a process similar to that described in S820-S822 to transmit management data for the probe devices 5b-5f to the management device 3.

The following effects can be achieved when managing devices connected to the aforementioned intra-office LAN using the device management system according to the second embodiment described above.

When using the device management system according to the second embodiment, the management device 3 or the probe devices 5b-5f having the shortest network distance to a device targeted as the unicast destination performs a unicast transmission to request the transmission of management data. Therefore, in addition to the effects obtained by the device management system according to the first embodiment, the device management system according to the second embodiment can further reduce the load on the management device 3. While communication between two devices having a great network distance can also place a load on the network and routers between the two devices, the unicast transmission described above is performed by either the management device 3 or one of the probe devices 5b-5f capable of achieving a relatively short network distance between devices. Hence, the device management system according to the second embodiment can reduce the load on the networks and routers. Further, executing a unicast transmission between two devices having a great network distance increases the number of relay processes performed by routers between the networks and, hence, increases the amount of time required to collect management data. However, the second embodiment described above collects management data between two devices on close networks, thereby reducing the amount of required time.

### Third Embodiment

Next, a third embodiment according to the present invention will be described.

Components in the third embodiment that are identical to those in the first embodiment have been designated with the same reference numerals to avoid duplicating description. The following description focuses on different points between the first embodiment and the third embodiment. The method for entering devices in the device list (see Fig. 5) differs between the first embodiment described above and the third embodiment as follows. Specifically, devices are entered in the device list in the first embodiment described above by the user inputting IP addresses via the user I/F 22 of the management device 3. However, in the third embodiment, the management device 3 automatically enters devices in the device list.

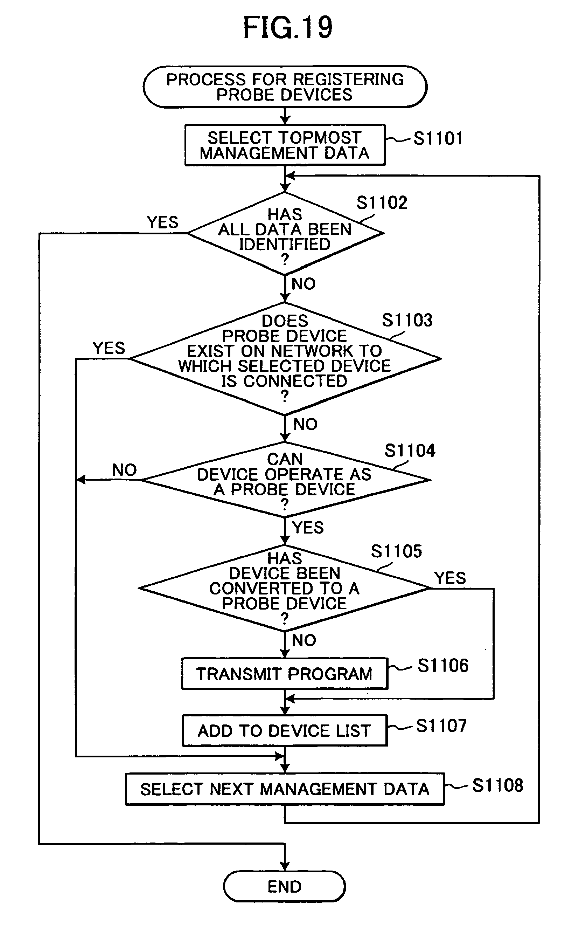

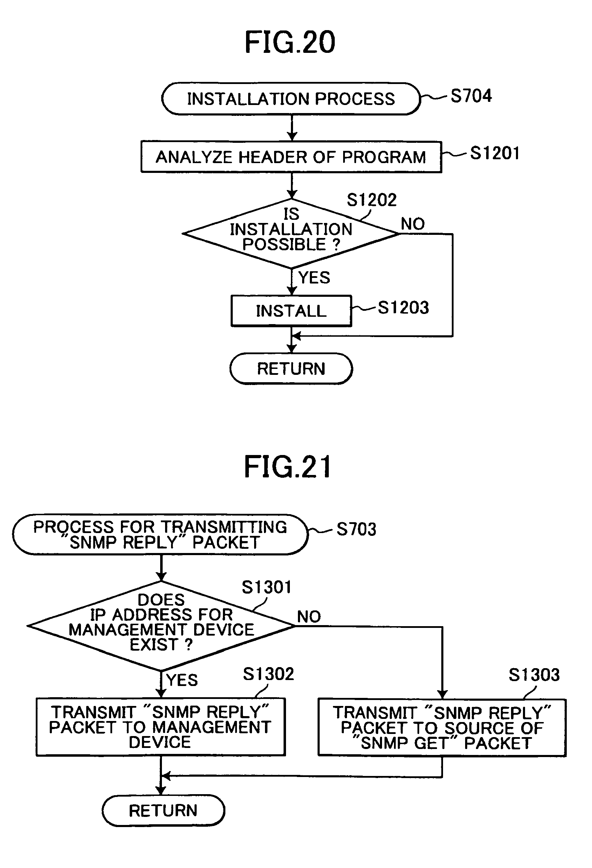

Next, the third embodiment will be described in detail with reference to Figs. 19 and 20. Fig. 19 illustrates a process for entering probe devices executed by the management device 3. Fig. 20 illustrates an installation process performed in the "other processes" (S704) in the device process shown in Fig. 14. Further, the process for entering probe devices is stored on the HDD 18 of the management device 3, while the installation process is stored in the ROM 34 of the probe devices 5b-5f or the ROM 54 of the devices a-n.

First, the process for entering probe devices will be described with reference to Fig. 19.

The process for entering probe devices shown in Fig. 19 is primarily performed for entering IP addresses in the device list (see Fig. 5). This process begins, for example, when the user indicates a desire to execute the process via the user I/F 22 of the management device 3.

In S1101 at the beginning of the process for entering probe devices, the CPU 12 selects the top management data from the management data stored on the HDD 18 (the management data collected thus far) and advances to S1102.

In S1102 the CPU 12 determines whether the process of S1103-S1108 described later has been executed for all management data stored on the HDD 18. If the CPU 12 determines that this process has been executed for all data (S1102: YES), then the CPU 12 ends the process for entering probe devices. If not (S1102: NO), then the CPU 12 advances to S1103.

In S1103 the CPU 12 determines whether one of the probe devices 5b-5f exist on the network to which the device that transmitted the selected management data is connected. If one of the devices exists on this network (S1103: YES), then the CPU 12 advances to S1108. If not (S1103: NO), then the CPU 12 advances to S1104. This determination is made based on whether the network address for the device that transmitted the selected management data matches the network address of the device entered in the device list.

In S1104 the CPU 12 determines whether the device that transmitted the selected management data can operate as a probe device. If the CPU 12 determines that the device can operate as a probe device (S1104: YES), then the CPU 12 advances to S1105. If not (S1104: NO), then the CPU 12 advances to S1108. This determination is performed based on whether the device is a model that can operate as a probe device by referencing the model name in the selected management data.

In S1105 the CPU 12 determines whether the device that transmitted the selected management data has already been prepared to operate as a probe device, that is, whether a program required for the device to operate as a probe device (hereinafter referred to as a probing program) has been installed. If the CPU 12 determines that the probing program has not been installed (S1105: NO), then the CPU 12 advances to S1106. If the program has been installed (S1105: YES), then the CPU 12 advances to S1107. This determination is made by referencing the model name included in the selected management data and determining whether the model has the probing program installed initially or requires the probing program to be installed later. The probing program described above corresponds to the program required to execute the probe device process described above (see Fig. 15). This probing program is stored on the HDD 18 of the management device 3.

In S1106 the CPU 12 transmits the probing program to the device that transmitted the selected management data and advances to S1107. Upon receiving the probing program, the device performs a process to install the program, as will be described later with reference to Fig. 20.

In S1107 the CPU 12 performs a process to add the IP address of the device that transmitted the selected management data to the device list, and advances to S1108.

In S1108 the CPU 12 selects the next management data and returns to S1102.

Next, the installation process will be described with reference to Fig. 20.

As described above, the installation process shown in Fig. 20 is performed in the "other processes" (S704) in the device process shown in Fig. 14. More specifically, this installation process is executed when the device receives the probing program transmitted in S1106 described above.

In S1201 at the beginning of the installation process, the CPU of the device analyzes the header portion of the probing program and advances to S1202.

In S1202 the CPU determines whether the probing program can be installed based on the results of the analysis performed in S1201. If the CPU determines that the program can be installed (S1202: YES), then the CPU advances to S1203. If the program cannot be installed (S1202: NO), then the CPU ends the installation process and returns to S701 in the device process (see Fig. 14). The CPU determines whether the program can be installed in S1202 based on whether sufficient storage capacity is available for installing the probing program, for example.

In S1203 the CPU performs a process to install the probing program, ends the installation process, and returns to S701 in the device process (see Fig. 14). Devices on which this probing program is installed are capable of executing the probe device process (see Fig. 15) based on this program and can function as a probe device.

In the third embodiment described above, the probing program is transmitted when it is determined that no device in the device list exists on the network to which the selected device is connected (S1103: NO). However, it is not necessary to perform this determination (S1103). For example, in place of this determination (S1103), the CPU 12 may determine whether communication is not possible with the probe device stored in the device list. In other words, if communication is not possible with the device entered in the device list, the CPU 12 may transmit a probing program and register a new probe device. Further, if multiple devices that are candidates for installing probing programs exist on a single network, the CPU 12 may transmit the probing program to the device having the highest priority based on a predetermined priority. This priority may favor devices that have existed on the network a long time or devices with a high working efficiency, for example. It is particularly desirable to give devices with a high operating efficiency priority since there is a greater probability that such devices can function as a probing device.

The following effects can be achieved in managing devices connected to the aforementioned intra-office LAN using the device management system according to the third embodiment described above.

In addition to the effects obtained with the device management system according to the first embodiment, the device management system according to the third embodiment can further reduce the load on the user since the user need not input IP addresses in the device list for devices for which management data can be collected. Further, since a device can be made to function as a probe device by transmitting a probing program required for functioning as a probing device, the device management system according to the third embodiment can use such a probe device to more smoothly collect management data.

### Fourth Embodiment

Next, a fourth embodiment according to the present invention will be described.

Components in the fourth embodiment that are identical to those in the first embodiment have been designated with the same reference numerals to avoid duplicating description. The following description focuses on points varying from the first embodiment. The transmission destination of the "SNMP REPLY" packet in the first embodiment described above and the fourth embodiment differ as follows. Specifically, in the first embodiment described above, the "SNMP REPLY" packet is returned to the source of the "SNMP GET" packet (the management device 3 or the probe devices 5b-5f). However, in the fourth embodiment, the packet is returned to the management device 3 without passing through the probe devices 5b-5f. The "SNMP GET" packet transmitted by the management device 3 or the probe devices 5b-5f in the fourth embodiment includes the IP address of the management device 3.

Next, the fourth embodiment will be described in detail with reference to Fig. 21. Fig. 21 is a flowchart illustrating the process for transmitting an "SNMP REPLY" packet (S703) in the device process shown in Fig. 14 according to the fourth embodiment.

In S1301 at the beginning of the process for transmitting an "SNMP REPLY" packet, the CPU determines whether the IP address of the management device 3 is stored in the received "SNMP GET" packet. If the packet includes the IP address (S1301: YES), the CPU advances to S1302. If the IP address is not included (S1301: NO), the CPU advances to S1303. Before transmitting a "SNMP GET" packet in the fourth embodiment, the management device 3 and the probe devices 5b-5f store the IP address of the management device 3 in the packet.

In S1302 the CPU transmits a "SNMP REPLY" packet to the management device 3 using the IP address of the management device 3 stored in the "SNMP GET" packet. Subsequently, the CPU ends the process for transmitting a "SNMP REPLY" packet and returns to S701 of Fig. 14.

In S1303 the CPU transmits a "SNMP REPLY" packet to the source of the "SNMP GET" packet, ends the process to transmit a "SNMP REPLY" packet, and returns to S701 of Fig. 14.

The following effects are obtained when devices connected to the aforementioned intra-office LAN are managed by using the device management system according to the fourth embodiment described above.

In addition to the effects obtained by the device management system according to the first embodiment, the device management system according to the fourth embodiment can reduce the processing load on the probe devices 5b-5f, since the "SNMP REPLY" packets are transmitted to the management device 3 directly, not via the probe devices 5b-5f.

### Fifth Embodiment

Next a fifth embodiment according to the present invention will be described.

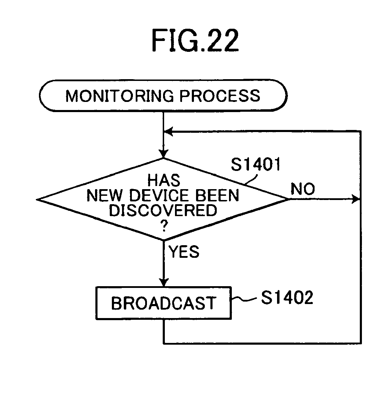

The components in the fifth embodiment identical to those in the first embodiment are designated with the same reference numerals to avoid duplicating description. The following description focuses on points that vary from the first embodiment. The fifth embodiment differs from the first embodiment in that the management device 3 or the probe devices 5b-5f execute a monitoring process shown in Fig. 22.

Next, the fifth embodiment will be described in detail with reference to Fig. 22. Fig. 22 is a flowchart showing a monitoring process executed by at least one of the management device 3 and the probe devices 5b-5f. The monitoring process is executed continuously while the power to the management device 3 or the probe devices 5b-5f is turned on.

In S1401 at the beginning of the monitoring process the CPU of the management device 3 or the probe devices 5b-5f monitors packets transmitted over the network via the network I/F 10 or network I/F 30 and determines whether new devices were detected on the network to which the monitoring device itself is connected, that is, whether an IP address confirmed for the first time and belonging to the same network as the monitoring device has been detected. If the IP address identified for the first time has been detected (S1401: YES), then the CPU advances to S1402. If the IP address identified for the first time has not been detected (S1401: NO), then the CPU returns to S1401 and continues to monitor packets. Here, IP addresses of packets monitored via the network I/F 10 or network I/F 30 are stored on the HDD 18 or the HDD 38. The process of S1401 is performed based on whether a new device has been detected by comparing the IP address of the monitored packets to the IP addresses stored on the HDD 18 or the HDD 38.

In S1402 the CPU broadcasts the "SNMP GET" packet described above (a packet requesting the transmission of management data and specifying the four OIDs in the OID table) over the network to which the monitoring device is connected, and returns to S1401 to continue monitoring packets.

The following effects are achieved when the devices connected to the aforementioned intra-office LAN are managed by using the device management system according to the fifth embodiment described above.

In addition to the effects achieved by the device management system according to the first embodiment, the device management system according to the fifth embodiment enables the management device 3 or the probe devices 5b-5f to detect a new device when the new device is connected to the network and to broadcast a "SNMP GET" packet. Accordingly, the management device 3 can quickly and easily be updated on changes to the network.

While the invention has been described in detail with reference to specific embodiments thereof, it would be apparent to those skilled in the art that many modifications and variations may be made therein without departing from the scope of the invention, which is defined by the attached claims.

For example, while the preferred embodiments describe an example of managing a printer, the device management system of the preferred embodiments may be applied to the management of any type of device such as a facsimile machine or scanner.

Further, the preferred embodiments collect management data at ten-minute intervals, but the device management system may be configured to collect management data based on instructions from the user. In this case, the user can acquire the latest management data for devices when the data is needed.

Further, when executing the process for requesting management data (Fig. 8: S102) in the embodiments described above, the management device 3 executes the process for requesting management data through a broadcast (S201) and the process for requesting management data through a unicast (S202). That is, the management device 3 decides sets all devices to transmit a "SNMP GET" packet and issues a request to all devices. However, the processes are not restricted to the above processes. A process essentially identical to the process for requesting management data through a broadcast (S201) and the process for requesting management data through a unicast (S202) can be configured to be executed by the probe devices 5b-5f. In this case, the management device 3 executes the process for requesting management data (Fig. 8: S102) to notify the probe devices 5b-5f of the management range for collecting management data. The probe devices 5b-5f then perform the process for requesting management data through a broadcast (S201) and the process for requesting management data through a unicast (S202) based on the management range received from the management device 3. This construction has the effect of reducing the load on the management device 3.

Further, the preferred embodiments describe an example in which the devices receiving a "SNMP GET" packet through a broadcast always send a "SNMP REPLY" packet. However, these devices may be configured to confirm the OID stored in the "SNMP GET" packet and to reply only when the packet is provided with an object corresponding to that OID. With this construction, the management device 3 and the probe devices 5b-5f no longer receive unnecessary "SNMP REPLY" packets, thereby reducing the processing load on these devices.

Further, the preferred embodiments are explained with the OID table shown in Fig. 4, but obviously the content of the OID table may be modified as appropriate. For example, if it is preferable to collect specific error data, a "prtAlert" object corresponding to this error data may be added to the OID table. This construction can eliminate the time and effort required to collect such error data. The same process may be performed for settings for a printer (such as resolution and page layout) as well as error data.

### INDUSTRIAL APPLICABILITY

As described above, the device management system, probe device, device, and computer program according to the present invention may be applied to a wide range of device management systems for managing such devices as printers, facsimile machines, and scanners connected to an intra-office LAN or other network; a probe device used on this device management system; a device used on this device management system; and a computer program, and may particularly be replied to the case of managing devices on a network beyond a router.

## Claims

1. A device management system for managing a device connected to a first network (1b-1f) with a management device (3) connected to a second network (1a) that is adapted to communicate with the first network (1b-1f) through a router (2a-2e), **characterized by** a probe device (5b-5f) provided on the first network (1b-1f) and capable of communicating with the management device (3) through the router; the router being adapted to prevent broadcast beyond each of the first network and the second network:
the probe device (5b-5f) including:
broadcasting means for broadcasting a request for management data used to manage the device to the first network (1b-1f) to which the probe device (5b-5f) is connected; and
forwarding means for forwarding the management data to the management device (3), the management data being obtained from the device that responds to the broadcast; and
the management device (3) including:
unicasting means for transmitting a request to the probe device by unicast, the request requesting the probe device to forward the management data;
managing means for managing the device on the first network (1b-1f) based on the management data forwarded by the forwarding means.

2. The device management system according to Claim 1, **characterized in that** the forwarding means is adapted to forward the management data to the management device (3) sequentially each time management data is obtained from the device that responds to the broadcast.

3. The device management system according to any one of Claims 1 and 2, **characterized in that** the probe device (5b-5f) further comprises storing means for storing the management data obtained from the device that responds to the broadcast; and
the forwarding means is adapted to forward new management data to the management device (3), the new management data being obtained from the device that responds to the broadcast, the new management data being different from the previous management data stored by the storing means.

4. The device management system according to any one of Claims 1 through 3, **characterized in that** the management device (3) comprises notifying means for notifying the probe device (5b-5f) of a condition for a management-target device; and
the forwarding means is adapted to forward to the management device (3) the management data of a device that satisfies the condition notified through the notifying means.

5. A device management system for managing a device connected to a first network (1b-1f) with a management device (3) connected to a second network (1a) that is adapted to communicate with the first network (1b-1f) through a router (2a-2e), comprising a probe device (5b-5f) provided on the first network (1b-1f) and capable of communicating with the management device (3) through the router; **characterized in that**
the router being adapted to prevent broadcast beyond each of the first network and the second network;
the probe device (5b-5f) includes:
broadcasting means for broadcasting over the first network (1b-1f) connected to the probe device (5b-5f) a command for the device to transmit management data for managing the device to the management device (3);
the device includes destination setting and transmitting means for setting a response destination for the broadcast to the management device (3) based on the command by the broadcasting means to transmit the management data; and
the management device (3) includes unicasting means for transmitting a request to the probe device by unicast, the request requesting the probe device to forward the management data, and managing means for managing the device on the first network (1b-1f) based on the management data received from the device.

6. The device management system according to any one of Claims 1 through 5, **characterized in that** the management device (3) comprises notifying means for notifying the probe device (5b-5f) of a condition for a management-target device; and
the broadcasting means is adapted to brodcast over the first network (1b-1f) a request for management data from a device that satisfies the condition notified through the notifying means.

7. The device management system according to any one of Claims 1 through 6, **characterized in that** the probe device (5b-5f) comprises determining means for determining whether a new device is connected to the first network (1b-1f); and
the broadcasting means is adapted to broadcast when the determining means has determined that a new device is connected to the first network (1b-1f).

8. The device management system according to any one of Claims 1 through 6, **characterized in that** the broadcasting means is adapted to broadcast when receiving from the management device (3) a request for a broadcast.

9. The device management system according to any one of Claims 1 through 8, **characterized in that** the management device (3) is adapted to direct registered probe device (5b-5f) for a broadcast.

10. The device management system according to Claim 9, **characterized in that** a management device (3) connected to the second network (1a) is adapted to unicast requesting management data from a device connected to the first network (1b-1f) when the registered probe device (5b-5f) does not exist on the first network (1b-1f).

11. The device management system according to any one of Claims 9 and 10, **characterized in that** a probe device (5b-5f) connected to a sub-network is adapted to unicast requesting management data from a device connected to the first network (1b-1f), the sub-network has a predetermined number of routers (2a-2e) connected to the first network (1b-1f), the predetermined number being less than the number of routers (2a-2e) between the first network (1b-1f) and the management device (3) when the registered probe device (5b-5f) does not exist on the first network (1b-1f).

12. The device management system according to any one of Claims 9 through 11, **characterized in that** a probe device (5b-5f) identified on a network having no registered probe device (5b-5f) is newly registered.

13. The device management system according to any one of Claims 9 through 12, **characterized in that** when a device capable of functioning as a probe device (5b-5f) is identified on a network having no registered probe device (5b-5f), a computer program enabling a device to function as a probe device (5b-5f) is transmitted to the device to actuate the device as a probe device (5b-5f), and the device is registered on the management device (3) as a probe device (5b-5f).

14. The device management system according to any one of Claims 1 through 13, **characterized in that** the management device (3) is adapted to notify the probe device (5b-5f) of a network range for collecting management data, and the probe device (5b-5f) is adapted to request management data from a device belonging to the notified network range through one of a broadcast and a unicast.

15. The device management system according to any one of Claims 1 and 5, **characterized in that** the management device (3) comprises program transmitting means for determining whether a device to be managed based on the management data can function as a probe device (5b-5f) and transmitting a probing program to the device which is determined to function as a probe device (5b-5f), the probing program enabling a device to function as a probe device (5b-5f); and
the device receiving the probing program includes installing means for installing the probing program.

16. The device management system according to Claim 15, **characterized in that** the management device (3) is adapted to transmit the probing program to a device capable of functioning as a probe device (5b-5f) by means of the program transmitting means when the management device (3) cannot communicate with the probe device (5b-5f).

17. The device management system according to Claim 15, **characterized in that** the program transmitting means is adapted to transmit the probing program to a device having a high priority when a plurality of devices capable of functioning as the probe devices (5b-5f) has been identified.

18. The device management system according to any one of Claims 1 through 17, **characterized in that** the device is a printer; and the management data includes data indicating at least one of printer settings and printer status.

19. The device management system according to Claim 8, **characterized in that** the management data includes data indicating at least one of printer settings and printer status; and
the probe device (5b-5f) is a printer, the probe device (5b-5f) transmitting management data thereof to the management device (3) upon receiving a request from the management device (3) for a broadcast.

20. The device management system according to Claim 14, **characterized in that** the management data includes data indicating at least one of printer settings and printer status; and
the probe device (5b-5f) is a printer, the probe device (5b-5f) transmitting management data thereof to the management device (3) upon receiving notification from the management device (3) of a network range for collecting management data.

21. A probe device used in the device management system according to Claim 1 and provided on the first network (1b-1f) in communication with the management device (3) connected to the second network, comprising:
broadcasting means for broadcasting over the first network (1b-1f) connected to the probe device (5b-5f) a request for management data to manage the device; and
forwarding means for forwarding to the management device (3) the management data obtained from a device responding to the broadcast.

22. A probe device used in the device management system according to Claim 5 and provided on the first network (1b-1f) in communication with the management device (3) connected to the second network, comprising:
broadcasting means for broadcasting over the first network (1b-1f) connected to the probe device (5b-5f) a command for the device to transmit management data for managing the devices to the management device (3).

23. A device used in the device management system according to Claim 5 and connected to the first network (1b-1f), comprising destination setting and transmitting means for setting a destination to the management device (3) connected to the second network and transmitting the management data thereto when commanded through a broadcast by the probe device (5b-5f) to transmit management data for managing the devices to the management device (3).

24. The probe device according to claim 21 or 22, used in the device management system according to Claim 14, wherein the broadcasting means are adapted for broadcasting a request for management data to a device within a network range for collecting management data; and
and the probe device comprises unicast means for unicasting a request for management data to a device within the network range when notified of the network range from the management device (3).

25. A method executed by the probe device (5b-5f) used in the device management system according to Claim 1 and provided on the first network (1b-1f) in communication with the management device (3) connected to the second network, comprising the steps:
broadcasting over the first network (1b-1f) connected to the probe device (5b-5f) a request for management data to manage the device; and
forwarding to the management device (3) the management data obtained from the device responding to the broadcast.

26. A method executed by the probe device (5b-5f) used in the device management system according to Claim 5 and provided on the first network (1b-1f) in communication with the management device connected to the second network, comprising the steps:
broadcasting over the first network (1b-1f) connected to the probe device (5b-5f) a command for the device to transmit management data for managing the devices to the management device (3).

27. A method used in the device management system according to Claim 5 executed by a device connected to the first network (1b-1f), comprising the steps
setting a destination to the management device (3) and transmitting the management data thereto when commanded through a broadcast by the probe device (5b-5f) to transmit management data for managing the devices to the management device (3).

28. The method according to claims 25 or 26 used in the device management system according to Claim 14 executed by the probe device (5b-5f), comprising the steps:
broadcasting a request for management data from a device within a network range for collecting management data; and
unicasting a request for management data from a device within the network range when notified of the network range from the management device (3).

29. A computer program comprising computer program code which,
when executed by computer devices,
causes the computer device to carry out the method steps of any claims 25 to 28.

## Patentansprüche

1. Ein Vorrichtungsverwaltungssystem zum Verwalten einer Vorrichtung, die an ein erstes Netz (1b - 1f) angeschlossen ist, mit einer Verwaltungsvorrichtung (3), die an ein zweites Netz (1a) angeschlossen ist, das daran angepasst ist, mit dem ersten Netz (1b - 1f) über einen Router (2a - 2e) zu kommunizieren, **gekennzeichnet durch** eine Sondenvorrichtung (5b - 5f), die in dem ersten Netz (1b - 1f) vorgesehen ist, und dazu in der Lage ist, mit der Verwaltungsvorrichtung (3) über den Router zu kommunizieren, wobei der Router daran angepasst ist, Broadcasts jenseits sowohl des ersten Netzes als auch den zweiten Netzes zu verhindern;
wobei die Sondenvorrichtung (5b - 5f) beinhaltet:
Broadcastmittel zum Verbreiten einer Anfrage nach Verwaltungsdaten, die dazu verwendet werden, die Vorrichtung zu verwalten, über das erste Netz (1b - 1f), an dem die Sondenvorrichtung (5b - 5f) angeschlossen ist; und
Weiterleitungsmittel zum Weiterleiten der Verwaltungsdaten an die Verwaltungsvorrichtung (3), wobei die Verwaltungsdaten von der Vorrichtung erhalten werden, die auf den Broadcast antwortet; und
die Managementvorrichtung (3) beinhaltet:
Unicastmittel zum Übermitteln einer Anfrage an die Sondenvorrichtung **durch** einen Unicast, wobei die Anfrage von der Sondenvorrichtung anfragt, die Verwaltungsdaten weiterzuleiten;
Verwaltungsmittel zum Verwalten der Vorrichtung in dem ersten Netz (1b - 1f), basierend auf den Verwaltungsdaten, die **durch** die Weiterleitungsmittel weitergeleitet wurden.

2. Das Vorrichtungsverwaltungssystem gemäß Anspruch 1, **dadurch gekennzeichnet, dass** die Weiterleitungsmittel daran angepasst sind, die Verwaltungsdaten an die Verwaltungsvorrichtung (3) jedes Mal nacheinander weiterzuleiten, wenn Verwaltungsdaten von der Vorrichtung, die auf den Broadcast antwortet, erhalten wurden.

3. Das Vorrichtungsverwaltungssystem gemäß einem der Ansprüche 1 und 2, **dadurch gekennzeichnet, dass** die Sondenvorrichtung (5b - 5f) ferner Speichermittel zum Speichern der Verwaltungsdaten, die von der Vorrichtung erhalten wurden, die auf den Broadcast antwortet, aufweist; und
die Weiterleitungsmittel daran angepasst sind, dass sie neue Verwaltungsdaten an die Verwaltungsvorrichtung (3) weiterleiten, wobei die neuen Verwaltungsdaten von der Vorrichtung erhalten wurden, die auf den Broadcast antwortet und die neunen Verwaltungsdaten unterschiedlich von den vorhergehenden Verwaltungsdaten sind, die durch die Speichermittel gespeichert wurden.

4. Das Vorrichtungsverwaltungssystem gemäß einem der Ansprüche 1 bis 3, **dadurch gekennzeichnet, dass** die Verwaltungsvorrichtung (3) Benachrichtigungsmittel zum Benachrichtigen der Sondenvorrichtung (5b - 5f) über einen Zustand für eine Verwaltungszielvorrichtung aufweist; und
die Weiterleitungsmittel daran angepasst sind, an die Verwaltungsvorrichtung (3) die Verwaltungsdaten einer Vorrichtung weiterzuleiten, die den Bedingungen entspricht, die durch die Benachrichtigungsmittel mitgeteilt wurden.

5. Ein Vorrichtungsverwaltungssystem zum Verwalten einer Vorrichtung, das an ein erstes Netz (1b - 1f) angeschlossen ist, mit einer Verwaltungsvorrichtung (3), die an ein zweites Netz (1a) angeschlossen ist, das daran angepasst ist, mit dem ersten Netz (1b - 1f) über einen Router (2a - 2e) zu kommunizieren, das eine Sondenvorrichtung (5b - 5f) aufweist, die in dem ersten Netz (1b -1f) vorgesehen ist, und dazu in der Lage ist, mit der Verwaltungsvorrichtung (3) über den Router zu kommunizieren, **dadurch gekennzeichnet, dass**
der Router daran angepasst ist, einen Broadcast jenseits sowohl des ersten als auch des zweiten Netzes zu verhindern;
die Sondenvorrichtung (5b - 5f) beinhaltet:
Broadcastmittel zum Verbreiten eines Befehls für die Vorrichtung, Verwaltungsdaten zum Verwalten der Vorrichtung an die Verwaltungsvorrichtung (3) zu übertragen, über das erste Netz (1b -1f), das an die Sondenvorrichtung (5b - 5f) angeschlossen ist;
die Vorrichtung Zieleinstellungs- und Übertragungsmittel zum Einstellen eines Antwortziels für den Broadcast an die Verwaltungsvorrichtung (3) basierend auf dem Befehl durch die Broadcastmittel, die Verwaltungsdaten zu übertragen, beinhaltet; und
die Verwaltungsvorrichtung (3) Unicastmittel zum Übertragen einer Anfrage an die Sondenvorrichtung durch einen Unicast, wobei die Anfrage von der Sondenvorrichtung verlangt, die Verwaltungsdaten weiterzuleiten, und Verwaltungsmittel zum Verwalten der Vorrichtung in dem ersten Netz (1b-1f) basierend auf den Verwaltungsdaten, die von der Vorrichtung empfangen wurden, beinhaltet.

6. Das Vorrichtungsverwaltungssystem gemäß einem der Ansprüche 1 bis 5, **dadurch gekennzeichnet, dass** die Verwaltungsvorrichtung (3) Benachrichtigungsmittel zum Benachrichtigen der Sondenvorrichtung (5b - 5f) über einen Zustand für eine Verwaltungszielvorrichtung aufweist; und
die Broadcastmittel daran angepasst sind, über das erste Netz eine Anfrage nach Verwaltungsdaten von einer Vorrichtung, die Bedingungen entspricht, die durch Benachrichtigungsmittel mitgeteilt wurden, zu verbreiten.

7. Das Vorrichtungsverwaltungssystem gemäß einem der Ansprüche 1 bis 6, **dadurch gekennzeichnet, dass** die Sondenvorrichtung (5b - 5f) Bestimmungsmittel zum Bestimmen, ob eine neue Vorrichtung an das erste Netz (1b- 1f) angeschlossen wurde, aufweist; und
die Broadcastmittel daran angepasst sind, zu verbreiten, dass eine neue Vorrichtung an das erste Netz (1b - 1f) angeschlossen ist, wenn die Bestimmungsmittel bestimmen, dass eine neue Vorrichtung angeschlossen ist.

8. Das Vorrichtungsverwaltungssystem gemäß einem der Ansprüche 1 bis 6, **dadurch gekennzeichnet, dass** die Broadcastmittel daran angepasst sind, einen Broadcast weiterzuleiten, wenn sie von der Verwaltungsvorrichtung (3) eine Anfrage nach einem Broadcast empfangen.

9. Das Vorrichtungsverwaltungssystem gemäß einem der Ansprüche 1 bis 8, **dadurch gekennzeichnet, dass** die Verwaltungsvorrichtung (3) daran angepasst ist, eine registrierte Sondenvorrichtung (5b - 5f) für einen Broadcast zu leiten.

10. Das Vorrichtungsverwaltungssystem gemäß Anspruch 9, **dadurch gekennzeichnet, dass** eine Verwaltungsvorrichtung (3), die an das zweite Netz (1a) angeschlossen ist, daran angepasst ist, dass sie Anfrageverwaltungsdaten von einer Vorrichtung, die an das erste Netz (1b -1f) angeschlossen ist, mittels Unicast zu verbreiten, wenn die registrierte Sondenvorrichtung (5b - 5f) nicht in dem ersten Netz (1b - 1f) existiert.

11. Das Vorrichtungsverwaltungssystem gemäß einem der Ansprüche 9 und 10, **dadurch gekennzeichnet, dass** eine Sondenvorrichtung (5b - 5f), die an ein Subnetz angeschlossen ist, daran angepasst ist, Anfrageverwaltungsdaten von einer Vorrichtung, die an das erste Netz (1b - 1f) angeschlossen ist, mittels Unicast zu verbreiten, das Subnetz eine vorbestimmte Anzahl Router (2a - 2e) aufweist, die an das erste Netz (1b - 1f) angeschlossen sind, wobei die vorbestimmte Anzahl weniger ist, als die Anzahl Router (2a - 2e) zwischen dem ersten Netz (1b - 1f) und der Verwaltungsvorrichtung (3), wenn die registrierte Sondenvorrichtung (5b - 5f) nicht in dem ersten Netz (1b - 1f) existiert.

12. Das Vorrichtungsverwaltungssystem gemäß einem der Ansprüche 9 bis 11, **dadurch gekennzeichnet, dass** eine Sondenvorrichtung (5b - 5f), die in einem Netz identifiziert ist, das keine registrierte Sondenvorrichtung (5b - 5f) aufweist, neu registriert wird.

13. Das Vorrichtungsverwaltungssystem gemäß einem der Ansprüche 9 bis 12, **dadurch gekennzeichnet, dass**, wenn eine Vorrichtung, die dazu in der Lage ist, als Sondenvorrichtung (5b - 5f) zu funktionieren, in einem Netz identifiziert wird, das über keine registrierte Sondenvorrichtung (5b -5f) verfügt, ein Computerprogramm, das eine Vorrichtung in die lage versetzt, als eine Sondenvorrichtung (5b - 5f) zu funktionieren, an die Vorrichtung übertragen wird, um die Vorrichtung als Sondenvorrichtung (5b - 5f) zu betreiben, und die Vorrichtung auf der Verwaltungsvorrichtung (3) als Sondenvorrichtung (5b - 5f) registriert wird.

14. Das Vorrichtungsverwaltungssystem gemäß einem der Ansprüche 1 bis 13, **dadurch gekennzeichnet, dass** die Verwaltungsvorrichtung (3) daran angepasst ist, die Sondenvorrichtung (5b - 5f) über einen Netzbereich zur Sammlung von Verwaltungsdaten zu benachrichtigen, und die Sondenvorrichtung (5b - 5f) daran angepasst ist, dass sie Verwaltungsdaten von einer Vorrichtung, die zu dem benachrichtigten Netzbereich gehört, durch entweder ein Broadcast oder ein Unicast anzufragen.

15. Das Vorrichtungsverwaltungssystem gemäß einem der Ansprüche 1 bis 5, **dadurch gekennzeichnet, dass** die Verwaltungsvorrichtung (3) Programmübermittlungsmittel aufweist, zum Bestimmen, ob eine zu verwaltende Vorrichtung basierend auf den Verwaltungsdaten als Sondenvorrichtung (5b - 5f) funktionieren kann, und zum Übermitteln eines Sondenprogramms an die Vorrichtung, die als Sondenvorrichtung (5b - 5f) funktionierbar bestimmt wurde, wobei das Sondenprogramm eine Vorrichtung in die Lage versetzt, als Sondenvorrichtung (5b - 5f) zu funktionieren; und
die Vorrichtung, die das Sondenprogramm empfängt, Installiermittel zum Installieren des Sondenprogramms beinhaltet.

16. Das Vorrichtungsverwaltungssystem gemäß Anspruch 15, **dadurch gekennzeichnet, dass** die Verwaltungsvorrichtung (3) daran angepasst ist, das Sondenprogramm mittels der Programmübertragungsmittel an eine Vorrichtung zu übertragen, die dazu in der Lage ist, als Sondenvorrichtung (5b - 5f) zu funktionieren, wenn die Verwaltungsvorrichtung (3) nicht mit der Sondenvorrichtung (5b - 5f) kommunizieren kann.

17. Das Vorrichtungsverwaltungssystem gemäß Anspruch 15, **dadurch gekennzeichnet, dass** die Programmübertragungsmittel daran angepasst sind, das Sondenprogramm an eine Vorrichtung zu übertragen, die eine hohe Priorität besitzt, wenn eine Vielzahl Vorrichtungen identifiziert wurde, die als Sondenvorrichtung (5b - 5f) funktionieren können.

18. Das Vorrichtungsverwaltungssystem gemäß einem der Ansprüche 1 bis 17, **dadurch gekennzeichnet, dass** die Vorrichtung ein Drucker ist, und die Verwaltungsdaten Daten beinhalten, die mindestens Druckeinstellungen oder Druckerstatus anzeigen.

19. Das Vorrichtungsverwaltungssystem gemäß Anspruch 8, **dadurch gekennzeichnet, dass** die Verwaltungsdaten Daten beinhalten, die mindestens Druckereinstellungen oder Druckerstatus anzeigen; und
die Sondenvorrichtung (5b - 5f) ein Drucker ist, wobei die Sondenvorrichtung (5b - 5f) Verwaltungsdaten davon an die Verwaltungsvorrichtung (3) beim Empfang einer Anfrage von der Verwaltungsvorrichtung (3) nach einem Broadcast übermittelt.

20. Das Vorrichtungsverwaltungssystem gemäß Anspruch 14, **dadurch gekennzeichnet, dass** die Verwaltungsdaten Daten beinhalten, die mindestens Druckereinstellung oder Druckstatus anzeigen; und
die Sondenvorrichtung (5b - 5f) ein Drucker ist, wobei die Sondenvorrichtung (5b - 5f) Verwaltungsdaten davon an die Verwaltungsvorrichtung (3) beim Empfang einer Benachrichtigung von der Verwaltungsvorrichtung (3) über einen Netzbereich zum Sammeln von Verwaltungsdaten überträgt.

21. Eine Sondenvorrichtung, die in dem Vorrichtungsverwaltungssystem gemäß Anspruch 1 verwendet wird und in einem ersten Netz (1b - 1f) in Verbindung mit der Verwaltungsvorrichtung (3), die an das zweite Netz angeschlossen ist, vorgesehen ist, die aufweist:
Broadcastmittel zum Verbreiten einer Anfrage für Verwaltungsdaten zum Verwalten der Vorrichtung über das erste Netz (1b - 1f), das an die Sondenvorrichtung (5b - 5f) angeschlossen ist; und
Weiterleitungsmittel zum Weiterleiten der Verwaltungsdaten, die von einer Vorrichtung erhalten wurden, die auf den Broadcast antwortet, an die Verwaltungsvorrichtung (3).

22. Eine Sondenvorrichtung, die in dem Vorrichtungsverwaltungssystem gemäß Anspruch 5 verwendet wird und in dem ersten Netz (1b - 1f) in Verbindung mit der Verwaltungsvorrichtung (3), die an das zweite Netz angeschlossen ist, vorgesehen ist, die aufweist:
Broadcastmittel zum Verbreiten eines Befehls für die Vorrichtung, Verwaltungsdaten zum Verwalten der Vorrichtung an die Verwaltungsvorrichtung (3) zu übertragen, über das erste Netz (1b - 1f), das an die Sondenvorrichtung (5b - 5f) angeschlossen ist.

23. Eine Vorrichtung, die in dem Vorrichtungsverwaltungssystem gemäß Anspruch 5 verwendet wird und an das erste Netz (1b - 1f) angeschlossen ist, die Zieleinstellungs- und Übertragungsmittel aufweist, zum Einstellen eines Ziels zu der Verwaltungsvorrichtung (3), die an das zweite Netz angeschlossen ist, und Übertragen der Verwaltungsdaten dorthin, wenn sie durch einen Broadcast durch die Sondenvorrichtung (5b - 6f) instruiert wurde, Verwaltungsdaten zum Verwalten der Vorrichtung an die Verwaltungsvorrichtung (3) zu Übertragen.

24. Die Sondenvorrichtung gemäß Anspruch 21 oder 22, die indem Vorrichtungsverwaltungssystem gemäß Anspruch 14 verwendet wird, wobei die Broadcastmittel daran angepasst sind, eine Anfrage für Verwaltungsdaten an eine Vorrichtung innerhalb eines Netzbereichs zum Sammeln von Verwaltungsdaten zu verbreiten; und
die Sondenvorrichtung Unicastmittel zum Verbreiten einer Anfrage nach Verwaltungsdaten an eine Vorrichtung innerhalb des Netzbereichs, wenn sie über den Netzbereich der Verwaltungsvorrichtung (3) benachrichtigt wurde, aufweist.

25. Ein Verfahren, das durch die Sondenvorrichtung (5b - 5f) ausgeführt wird, die in dem Vorrichtungsverwaltungssystem gemäß Anspruch 1 verwendet wird und in dem ersten Netz (1b - 1f) in Verbindung mit der Verwaltungsvorrichtung (3), die an das zweite Netz angeschlossen ist, vorgesehen ist, das die Schritte aufweist:
Verbreiten, mittels Broadcast, über das erste Netz (1b - 1f), das an die Sondenvorrichtung (5b - 5f) angeschlossen ist, einer Anfrage nach Verwaltungsdaten zum Verwalten der Vorrichtung; und
Weiterleiten der Verwaltungsdaten, die von der Vorrichtung erhalten wurden, die auf den Broadcast antwortete, an die Verwaltungsvorrichtung (3).

26. Ein Verfahren, das durch die Sondenvorrichtung (5b - 5f) ausgeführt wird, die in dem Vorrichtungsverwaltungssystem gemäß Anspruch 5 verwendet wird und in dem ersten Netz (1b - 1f) in Verbindung mit der Verwaltungsvorrichtung, die an das zweite Netz angeschlossen ist, vorgesehen ist, das die Schritte aufweist:
Verbreiten, mittels Broadcast, über das erste Netz (1b - 1f), das an die Sondenvorrichtung (5b - 5f) angeschlossen ist, eines Befehls für die Vorrichtung, Verwaltungsdaten zum Verwalten der Vorrichtung an die Verwaltungsvorrichtung (3) zu übermitteln.

27. Ein Verfahren, das in dem Vorrichtungsverwaltungssystem gemäß Anspruch 5 verwendet wird, und das durch eine Vorrichtung ausgeführt wird, die an das erste Netz (1b - 1f) angeschlossen ist, das die Schritte aufweist:
Einstellen eines Ziels zu der Verwaltungsvorrichtung (3) und Übertragen der Verwaltungsdaten dorthin, wenn man durch einen Broadcast durch die Sondenvorrichtung (5b - 5f) instruiert wurde, Verwaltungsdaten zu verwalten, der Vorrichtung an die Verwaltungsvorrichtung (3) zu übertragen.

28. Das Verfahren gemäß Anspruch 25 oder 26, das in dem Vorrichtungsverwaltungssystem gemäß Anspruch 14 verwendet wird und das durch die Sondenvorrichtung (5b - 5f) ausgeführt wird, das die Schritte aufweist:
Verbreiten, mittels Broadcast, einer Anfrage nach Verwaltungsdaten von einer Vorrichtung innerhalb eines Netzbereichs zum Sammeln von Verwaltungsdaten; und
Verbreiten, mittels Unicast, einer Anfrage nach Verwaltungsdaten von einer Vorrichtung innerhalb des Netzbereichs, wenn man von dem Netzbereich von der Verwaltungsvorrichtung (3) benachrichtigt wurde.

29. Ein Computerprogramm, das Computerprogrammcode aufweist, der, wenn er auf Computervorrichtungen ausgeführt wird, die Computervorrichtungen dazu bringt, die Verfahrensschritte nach einem der Ansprüche 25 bis 28 auszuführen.

## Revendications

1. Système de gestion de dispositif pour gérer un dispositif connecté à un premier réseau (1b-1f) avec un dispositif de gestion (3) connecté à un second réseau (la) qui est adapté pour communiquer avec le premier réseau (1b-1f) par l'intermédiaire d'un routeur (2a-2e), **caractérisé par** un dispositif sonde (5b-5f) pourvu sur le premier réseau (1b-1f) et capable de communiquer avec le dispositif de gestion (3) par l'intermédiaire du routeur ; le routeur étant adapté pour empêcher la diffusion au-delà de chacun du premier réseau et du second réseau ;
le dispositif sonde (5b-5f) incluant :
un moyen de diffusion pour diffuser une demande pour des données de gestion utilisées pour gérer le dispositif au premier réseau (1b-1f) auquel le dispositif sonde (5b-5f) est connecté ; et
un moyen de transfert pour transférer les données de gestion au dispositif de gestion (3), les données de gestion étant obtenues à partir du dispositif qui répond à la diffusion ; et
le dispositif de gestion (3) incluant :
un moyen de diffusion individuelle pour transmettre une demande au dispositif sonde par diffusion individuelle, la demande demandant au dispositif sonde de transférer les données de gestion ;
un moyen de gestion pour gérer le dispositif sur le premier réseau (1b-1f) sur la base des données de gestion transférées par le moyen de transfert.

2. Système de gestion de dispositif selon la revendication 1, **caractérisé en ce que** le moyen de transfert est adapté pour transférer les données de gestion au dispositif de gestion (3) séquentiellement chaque fois que des données de gestion sont obtenues à partir du dispositif qui répond à la diffusion.

3. Système de gestion de dispositif selon l'une quelconque des revendications 1 et 2, **caractérisé en ce que** le dispositif sonde (5b-5f) comprend en outre un moyen de stockage pour stocker les données de gestion obtenues à partir du dispositif qui répond à la diffusion ; et
le moyen de transfert est adapté pour transférer de nouvelles données de gestion au dispositif de gestion (3), les nouvelles données de gestion étant obtenues à partir du dispositif qui répond à la diffusion, les nouvelles données de gestion étant différentes des données de gestion précédentes stockées par le moyen de stockage.

4. Système de gestion de dispositif selon l'une quelconque des revendications 1 à 3, **caractérisé en ce que** le dispositif de gestion (3) comprend un moyen de notification pour notifier au dispositif sonde (5b-5f) une condition pour un dispositif cible de gestion ; et
le moyen de transfert est adapté pour transférer au dispositif de gestion (3) les données de gestion d'un dispositif qui satisfait à la condition notifiée par l'intermédiaire du moyen de notification.

5. Système de gestion de dispositif pour gérer un dispositif connecté à un premier réseau (1b-1f) avec un dispositif de gestion (3) connecté à un second réseau (la) qui est adapté pour communiquer avec le premier réseau (1b-1f) par l'intermédiaire d'un routeur (2a-2e), comprenant un dispositif sonde (5b-5f) pourvu sur le premier réseau (1b-1f) et capable de communiquer avec le dispositif de gestion (3) par l'intermédiaire du routeur ; **caractérisé en ce que**
le routeur étant adapté pour empêcher la diffusion au-delà de chacun du premier réseau et du second réseau ;
le dispositif sonde (5b-5f) inclut :
un moyen de diffusion pour diffuser sur le premier réseau (1b-1f) connecté au dispositif sonde (5b-5f) une commande pour le dispositif pour transmettre des données de gestion pour gérer le dispositif au dispositif de gestion (3) ;
le dispositif inclut un moyen d'établissement de destination et de transmission pour établir une destination de réponse pour la diffusion au dispositif de gestion (3) sur la base de la commande par le moyen de diffusion pour transmettre les données de gestion ; et
le dispositif de gestion (3) inclut un moyen de diffusion individuelle pour transmettre une demande au dispositif sonde par diffusion individuelle, la demande demandant au dispositif sonde de transférer les données de gestion, et un moyen de gestion pour gérer le dispositif sur le premier réseau (1b-1f) sur la base des données de gestion reçues en provenance du dispositif.

6. Système de gestion de dispositif selon l'une quelconque des revendications 1 à 5, **caractérisé en ce que** le dispositif de gestion (3) comprend un moyen de notification pour notifier au dispositif sonde (5b-5f) une condition pour un dispositif cible de gestion ; et
le moyen de diffusion est adapté pour diffuser sur le premier réseau (1b-1f) une demande pour des données de gestion en provenance d'un dispositif qui satisfait à la condition notifiée par l'intermédiaire du moyen de notification.

7. Système de gestion de dispositif selon l'une quelconque des revendications 1 à 6, **caractérisé en ce que** le dispositif sonde (5b-5f) comprend un moyen de détermination pour déterminer si un nouveau dispositif est connecté au premier réseau (1b-1f) ; et
le moyen de diffusion est adapté pour diffuser quand le moyen de détermination a déterminé qu'un nouveau dispositif est connecté au premier réseau (1b-1f).

8. Système de gestion de dispositif selon l'une quelconque des revendications 1 à 6, **caractérisé en ce que** le moyen de diffusion est adapté pour diffuser quand recevoir en provenance du dispositif de gestion (3) une demande pour une diffusion.

9. Système de gestion de dispositif selon l'une quelconque des revendications 1 à 8, **caractérisé en ce que** le dispositif de gestion (3) est adapté pour diriger un dispositif sonde enregistré (5b-5f) pour une diffusion.

10. Système de gestion de dispositif selon la revendication 9, **caractérisé en ce qu'**un dispositif de gestion (3) connecté au second réseau (la) est adapté pour diffuser individuellement la demande de données de gestion depuis un dispositif connecté au premier réseau (1b-1f) lorsque le dispositif sonde enregistré (5b-5f) n'existe pas sur le premier réseau (1b-1f).

11. Système de gestion de dispositif selon l'une quelconque des revendications 9 et 10, **caractérisé en ce qu'**un dispositif sonde (5b-5f) connecté à un sous-réseau est adapté pour diffuser individuellement la demande de données de gestion depuis un dispositif connecté au premier réseau (1b-1f), le sous-réseau a un nombre prédéterminé de routeurs (2a-2e) connectés au premier réseau (1b-1f), le nombre prédéterminé étant inférieur au nombre de routeurs (2a-2e) entre le premier réseau (1b-1f) et le dispositif de gestion (3) lorsque le dispositif sonde enregistré (5b-5f) n'existe pas sur le premier réseau (1b-1f).

12. Système de gestion de dispositif selon l'une quelconque des revendications 9 à 11, **caractérisé en ce qu'**un dispositif sonde (5b-5f) identifié' sur un réseau n'ayant pas de dispositif sonde enregistré (5b-5f) est nouvellement enregistré.

13. Système de gestion de dispositif selon l'une quelconque des revendications 9 à 12, **caractérisé en ce que** lorsqu'un dispositif capable de fonctionner comme un dispositif sonde (5b-5f) est identifié sur un réseau n'ayant pas de dispositif sonde enregistré (5b-5f), un programme informatique permettant à un dispositif de fonctionner comme un dispositif sonde (5b-5f) est transmis au dispositif pour actionner le dispositif comme un dispositif sonde (5b-5f), et le dispositif est enregistré sur le dispositif de gestion (3) comme un dispositif sonde (5b-5f).

14. Système de gestion de dispositif selon l'une quelconque des revendications 1 à 13, **caractérisé en ce que** le dispositif de gestion (3) est adapté pour notifier au dispositif sonde (5b-5f) une portée de réseau pour collecter des données de gestion, et le dispositif sonde (5b-5f) est adapté pour demander des données de gestion à un dispositif appartenant à la portée de réseau notifiée par l'intermédiaire d'une d'une diffusion générale et d'une diffusion individuelle.

15. Système de gestion de dispositif selon l'une quelconque des revendications 1 et 5, **caractérisé en ce que** le dispositif de gestion (3) comprend un moyen de transmission de programme pour déterminer si un dispositif devant être géré sur la base des données de gestion peut fonctionner comme un dispositif sonde (5b-5f) et transmettre un programme de sondage au dispositif qui est déterminé pour fonctionner comme un dispositif sonde (5b-5f), le programme de sondage permettant à un dispositif de fonctionner comme un dispositif sonde (5b-5f) ; et
le dispositif recevant le programme de sondage inclut un moyen d'installation pour installer le programme de sondage.

16. Système de gestion de dispositif selon la revendication 15, **caractérisé en ce que** le dispositif de gestion (3) est adapté pour transmettre le programme de sondage à un dispositif capable de fonctionner comme un dispositif sonde (5b-5f) au moyen du moyen de transmission de programme lorsque le dispositif de gestion (3) ne peut pas communiquer avec le dispositif sonde (5b-5f).

17. Système de gestion de dispositif selon la revendication 15, **caractérisé en ce que** le moyen de transmission de programme est adapté pour transmettre le programme de sondage à un dispositif ayant une priorité élevée lorsqu'une pluralité de dispositifs capables de fonctionner comme les dispositifs sondes (5b-5f) a été identifiée.

18. Système de gestion de dispositif selon l'une quelconque des revendications 1 à 17, **caractérisé en ce que** le dispositif est une imprimante ; et les données de gestion incluent des données indiquant au moins un de réglages d'imprimante et d'état d'imprimante.

19. Système de gestion de dispositif selon la revendication 8, **caractérisé en ce que** les données de gestion incluent des données indiquant au moins un de réglages d'imprimante et d'état d'imprimante ; et
le dispositif sonde (5b-5f) est une imprimante, le dispositif sonde (5b-5f) transmettant des données de gestion de celui-ci au dispositif de gestion (3) lors de la réception d'une demande en provenance du dispositif de gestion (3) pour une diffusion.

20. Système de gestion de dispositif selon la revendication 14, **caractérisé en ce que** les données de gestion incluent des données indiquant au moins un de réglages d'imprimante et d'état d'imprimante ; et
le dispositif sonde (5b-5f) est une imprimante, le dispositif sonde (5b-5f) transmettant des données de gestion de celui-ci au dispositif de gestion (3) lors de la réception d'une notification en provenance du dispositif de gestion (3) d'une portée de réseau pour collecter des données de gestion.

21. Dispositif sonde utilisé dans le système de gestion de dispositif selon la revendication 1 et pourvu sur le premier réseau (1b-1f) en communication avec le dispositif de gestion (3) connecté au second réseau, comprenant :
un moyen de diffusion pour diffuser sur le premier réseau (1b-1f) connecté au dispositif sonde (5b-5f) une demande pour des données de gestion afin de gérer le dispositif ; et
un moyen de transfert pour transférer au dispositif de gestion (3) les données de gestion obtenues à partir d'un dispositif répondant à la diffusion.

22. Dispositif sonde utilisé dans le système de gestion de dispositif selon la revendication 5 et pourvu sur le premier réseau (1b-1f) en communication avec le dispositif de gestion (3) connecté au second réseau, comprenant :
un moyen de diffusion pour diffuser sur le premier réseau (1b-1f) connecté au dispositif sonde (5b-5f) une commande pour le dispositif pour transmettre des données de gestion pour gérer les dispositifs au dispositif de gestion (3).

23. Dispositif utilisé dans le système de gestion de dispositif selon la revendication 5 et connecté au premier réseau (1b-1f), comprenant un moyen d'établissement de destination et de transmission pour établir une destination au dispositif de gestion (3) connecté au second réseau, et transmettre les données de gestion à celui-ci lorsqu'il est commandé par l'intermédiaire d'une diffusion par le dispositif sonde (5b-5f) pour transmettre des données de gestion pour gérer les dispositifs au dispositif de gestion (3).

24. Dispositif sonde selon la revendication 21 ou 22 utilisé dans le système de gestion de dispositif selon la revendication 14, dans lequel le moyen de diffusion est adapté pour diffuser une demande pour des données de gestion à un dispositif à l'intérieur d'une portée de réseau pour collecter des données de gestion ; et
le dispositif sonde comprend un moyen de diffusion individuelle pour diffuser individuellement une demande pour des données de gestion à un dispositif à l'intérieur de la portée de réseau lorsque la portée de réseau est notifiée par le dispositif de gestion (3).

25. Procédé exécuté par le dispositif sonde (5b-5f) utilisé dans le système de gestion de dispositif selon la revendication 1 et pourvu sur le premier réseau (1b-1f) en communication avec le dispositif de gestion (3) connecté au second réseau, comprenant les étapes suivantes :
diffuser sur le premier réseau (1b-1f) connecté au dispositif sonde (5b-5f) une demande pour des données de gestion afin de gérer le dispositif ; et
transférer au dispositif de gestion (3) les données de gestion obtenues à partir du dispositif répondant à la diffusion.

26. Procédé exécuté par le dispositif sonde (5b-5f) utilisé dans le système de gestion de dispositif selon la revendication 5 et pourvu sur le premier réseau (1b-1f) en communication avec le dispositif de gestion connecté au second réseau, comprenant les étapes suivantes :
diffuser sur le premier réseau (1b-1f) connecté au dispositif sonde (5b-5f) une commande pour le dispositif pour transmettre des données de gestion pour gérer les dispositifs au dispositif de gestion (3).

27. Procédé utilisé dans le système de gestion de dispositif selon la revendication 5 exécuté par un dispositif connecté au premier réseau (1b-1f), comprenant les étapes suivantes :
établir une destination au dispositif de gestion (3) et transmettre les données de gestion à celui-ci lorsqu'il est commandé par l'intermédiaire d'une diffusion par le dispositif sonde (5b-5f) pour transmettre des données de gestion pour gérer les dispositifs au dispositif de gestion (3).

28. Procédé selon la revendication 25 ou 26 utilisé dans le système de gestion de dispositif selon la revendication 14 exécuté par le dispositif sonde (5b-5f), comprenant les étapes suivantes :
diffuser une demande pour des données de gestion depuis un dispositif à l'intérieur d'une portée de réseau pour collecter des données de gestion ; et
diffuser individuellement une demande pour des données de gestion depuis un dispositif à l'intérieur de la portée de réseau lorsque la portée de réseau est notifiée par le dispositif de gestion (3).

29. Programme informatique comprenant un code de programme informatique qui, lorsqu'il est exécuté par des dispositifs informatiques, amène les dispositifs informatiques à effectuer les étapes du procédé de l'une quelconque des revendications 25 à 28.
